# EUROPÄISCHE PATENTSCHRIFT

(11) **EP 3 802 121 B1**
(45) Veröffentlichungstag und Bekanntmachung des Hinweises auf die Patenterteilung: **20.07.2022**
(21) Anmeldenummer: 19725752.0
(22) Anmeldetag: 27.05.2019
(51) Int. Cl.: B32B 27/08, B32B 27/18, B32B 27/20, B32B 27/30, B32B 27/36, C08J 5/18, C08L 33/12, C08L 69/00

(54) **OPAKER MEHRSCHICHTKÖRPER AUS POLYCARBONAT MIT HOHER BEWITTERUNGSSTABILITÄT**
OPAQUE MULTILAYER BODIES MADE OF POLYCARBONATE HAVING A HIGH WEATHERING STABILITY
CORPS MULTICOUCHE OPAQUE DE POLYCARBONATE À STABILITÉ ÉLEVÉE

(30) Priorität: 29.05.2018 EP 18174694
(43) Veröffentlichungstag der Anmeldung: 14.04.2021
(73) Patentinhaber: Covestro Intellectual Property GmbH & Co. KG, 51373 Leverkusen (DE)
(72) Erfinder: MEYER, Alexander, 40489 Düsseldorf (DE); REICHENAUER, Jörg, 47802 Krefeld (DE); BLASCHKE, Ulrich, 47829 Krefeld (DE)
(74) Vertreter: Levpat
(86) Internationale Anmeldenummer: PCT/EP2019/063606
(87) Internationale Veröffentlichungsnummer: WO 2019/228959

(56) Entgegenhaltungen:
- EP-A1- 2 804 763
- US-A1- 2005 171 227
- US-A1- 2013 265 771

## Beschreibung

Die vorliegende Erfindung betrifft einen opaken Mehrschichtkörper, umfassend eine thermoplastische Schicht auf Basis von Polymethylmethacrylat oder aromatischem Polycarbonat, enthaltend Titandioxid, ggf. eine Primerschicht und eine Decklackschicht. Der erfindungsgemäße Mehrschichtkörper zeichnet sich durch hohe Farbstabilität bzw. Witterungsstabilität aus.

Außenteile, die dem Sonnenlicht und Witterungsbedingungen ausgesetzt sind und welche im Kraftfahrzeug-, Schienenfahrzeug- und Luftfahrzeug- bzw. im Infrastrukturbereich eingesetzt werden, müssen eine lange Lebensdauer aufweisen und dürfen während dieser nicht verspröden. Darüber hinaus sollten sich Farbe und Glanzgrad über die Lebensdauer nicht oder nur geringfügig verändern.

Aufgrund der hohen Lebensdauer von Kraftfahrzeugen, Schienenfahrzeugen, Luftfahrzeugen, sonstigen Fluggeräten und Architektur-Applikationen kommt es dabei insbesondere im Bereich hochpreisiger Außenteile darauf an, dass der gewünschte qualitativ hochwertige Farbeindruck des Materials über den Zeitraum der Nutzungsdauer ohne nennenswerte Einbußen erhalten bleibt. Dieses gilt auch für Teile für den Innenraum, z.B. den Fahrzeuginnenraum, die einer UV-Belastung ausgesetzt sind, wie z.B. Teile für die Armaturentafel.

Thermoplastische Polymere wie z.B. Polycarbonat bieten für den Einsatz im Fahrzeugbereich und für Gebäude etc. viele Vorteile gegenüber herkömmlichen Materialien. Hierzu zählen z.B. erhöhte Bruchsicherheit und/oder Gewichtsersparnis, die im Fall von Automobilaußenteilen eine höhere Sicherheit und einen niedrigeren Kraftstoffverbrauch ermöglichen. Ferner ermöglichen sie eine hohe Designfreiheit. Unter den thermoplastischen Kunststoffen sind zum Beispiel Zusammensetzungen, basierend auf aromatischem Polycarbonat und/oder Polymethylmethacrylat (PMMA) besonders gut für die Verwendung als Außenmaterial geeignet. Aufgrund der hohen Zähigkeit besitzt insbesondere aromatisches Polycarbonat ein sehr gutes Eigenschaftsprofil für derartige Einsatzzwecke.

Die Einfärbung von Kunststoffen an sich ist bekannt. So sind in WO 2013/079477 A1 dunkle Mehrschichtkörper aus Polycarbonat beschrieben, die organische Farbmittel enthalten. Optional kann Ruß zugesetzt werden; der Einsatz eines Weißpigments ist dort nicht beschrieben. US 2011/0207846 A1 offenbart mit Ruß eingefärbte Polycarbonat-Zusammensetzungen. Auch die farbige Einfärbung von Kunststoffen ist bekannt, so etwa aus US 2005/0171227 A1, in welchem die Einfärbung von Strahlungs-härtbaren Kunststoffen mit Pigmenten wie Titandioxid beschrieben ist. US 2008/0014376 A1 beschreibt thermoplastische Zusammensetzungen, beispielsweise auf Basis von Polycarbonat, enthaltend Weißpigment, etwa Titandioxid, und ein schwarzes Farbmittel sowie ein blaues Farbmittel. Zur Erzielung guter Witterungsstabilität ist beschrieben, dass Titandioxid des Rutiltyps verwendet werden sollte. Titandioxid ist ein gängiges Weißpigment für thermoplastische Zusammensetzungen, so auch in US 2014/0370213 A1 beschrieben. Es ist dem Fachmann bekannt, dass es witterungsstabile Farbzusammensetzungen gibt, die sich für den Einsatz in transparenten thermoplastischen Matrices eignen. Derartige Farbmittelkombinationen sind z.B. in WO 2011/141369 A1 beschrieben. Die in diesen Anmeldungen beschriebenen Farbmittelkombinationen eignen sich jedoch nicht für opake, sondern nur für transparente Formkörper oder Mehrschichtkörper, d.h. Formkörper, die eine Lichttransmission >1 % aufweisen. Überraschenderweise eignen sich diese Farbmittelkombinationen nicht für Kombinationen mit anorganischen Weißpigmenten, insbesondere Titandioxid, und insbesondere nicht für den Einsatz mit Titandioxidtypen, welche für den Einsatz in Polycarbonat eine optimierte Beschichtung aufweisen, wie Kronos^{®} 2230 der Firma Kronos Worldwide, Inc. Es konnte gezeigt werden, dass Farbmittel(kombinationen), die in transparenten Einstellungen eine hohe Farbstabilität aufweisen, überraschenderweise in Kombination mit Titandioxid eine sehr starke Farbverschiebung bzw. signifikante Ausbleicheffekte sowie einen Glanzverlust zeigen.

Es ist dem Fachmann prinzipiell bekannt, dass Titandioxid eine hohe Photoaktivität aufweist und damit zum Abbau von Farbmitteln und auch der thermoplastischen Matrix selbst beitragen kann bzw. den Abbau maßgeblich verursacht. Die Rolle von Titandioxid bei Außenbewitterung bzw. bei Bestrahlung mit UV-Licht, insbesondere bei Verwendung von Titandioxid-haltigen thermoplastischen Materialien, ist z.B. von Bolt et al. in Plastics Rubber and Composites, 2008, Vol. 37. S. 397-402 beschrieben. Titandioxid führt bei Wechselwirkung mit Licht insbesondere in Anwesenheit von Sauerstoff und Feuchtigkeit zu einem massiven Abbau von thermoplastischen Materialien und organischen Farbmitteln. Deshalb werden bei Bewitterung starke Vergilbung, Ausbleichen und Auskreidungseffekte von thermoplastischen Materialien, die Titandioxid enthalten, beobachtet. Ferner kann Titandioxid selbst auch bei Abwesenheit von Licht oder UV-Bestrahlung die thermoplastische Matrix angreifen. So kann es z.B. bei Compoundierung von thermoplastischen Materialien, insbesondere bei Polycarbonat, zu Molekulargewichtsabbau und Schmelzeinstabilität kommen. Ferner kann es bei weiteren Prozessschritten wie im Spritzguss zu Schlierenbildung kommen.

Aus diesem Grund wurden für thermoplastische Matrices optimierte Titandioxidtypen entwickelt. Diese Titandioxidtypen weisen eine optimierte Beschichtung bzw. Hülle oder Abfolge von Hüllen auf, die eine Verträglichkeit mit der jeweiligen Polymermatrix möglich machen und auch die Photoaktivität verringern. Derartige optimierte Titandioxidtypen sind z.B. in DE 102008058351 A1 beschrieben. Im Handel befindliche, für Polycarbonat optimierte Titandioxidtypen sind beispielsweise Kronos 2230 und Kronos 2233 (Kronos Worldwide Inc.). Der Einsatz von Kronos 2230 in Polycarbonat ist beispielsweise in der EP 2804763 A1 beschrieben, der Einsatz von Kronos 2233 in US 2013/0265771 A1. US 2014/0226342 A1 beschreibt stark reflektierende Polycarbonat-Zusammensetzungen mit geringem Yellowness-Index, enthaltend 10 bis 20 Gew.-% Titandioxid. Als Titanioxid ist beispielhaft Kronos 2233 angegeben. Allerdings hat sich gezeigt, dass auch diese Typen in Kombination mit Farbmitteln zu signifikanten Farbverschiebungen nach Bewitterung führen und hier Verbesserungsbedarf besteht.

Der Einsatz von Titandioxid als Weißpigment in thermoplastischen Materialien ist nötig, um in opaken Farben die für Außenanwendungen geforderte hohe Farbbrillanz zu gewährleisten. Versuche, Titandioxid durch andere Weißpigmente wie Bariumsulfat, Kaolin, Zinksulfid etc. zu ersetzen, zeigten, dass sich hierdurch die Farbstabilität nicht verbessern lässt bzw. sich die nötige Farbbrillanz nicht erreichen lässt. Bei allen opaken Farben - außer im Bereich schwarzer Farben - ist somit der Einsatz von Titandioxid zwingend erforderlich.

Im Stand der Technik sind viele organische Farbmittel als besonders lichtecht und somit auch als stabil beschrieben worden. Die Lichtechtheit (ermittelt bei 1/3 Richttyptiefe mit 1 Gew.-% TiO₂ (PS 2 Gew.-% TiO₂ in Anlehnung an DIN EN ISO 4892-2:2013-06; transparente Zusammensetzungen mit 0,05 Gew.-% Farbstoff; beurteilt nach 8-stufigem Blaumaßstab) der sogenannten Macrolex^{®}-Farbstoffe (Lanxess Datenblätter; Technische Information, Lanxess Deutschland GmbH, Functional Chemicals, High Performance Additives, Colorants, 51369 Leverkusen, Deutschland) wie z.B. der Farbstoffe Macrolex^{®} Blau RR (Solvent Blue 97), Macrolex^{®} Violett 3R (Solvent Violet 36), die für die Verwendung in Polycarbonat vorgesehen sind, ist mit 7-8 (8 = Höchstwert) eingestuft worden. Dennoch zeigte sich im Rahmen der vorliegenden Versuche, dass formal als lichtecht eingestufte Farbmittel in Polycarbonatzusammensetzungen mit für Polycarbonat optimierten Titandioxid-Typen wie Kronos^{®} 2230 und anderen herkömmlich in Polycarbonat verwendeten Titandioxid-Typen nicht die nötige Stabilität bei Bewitterung aufweisen.

Dem Fachmann ist ferner bekannt, dass sich thermoplastische Materialien durch den Einsatz bestimmter Additive stabilisieren lassen. So lässt sich die Witterungsstabilität durch Einsatz von UV-Absorbern verbessern. Allerdings ist dadurch nur eine unzureichende Farbstabilisierung zu erreichen. Weiterhin sind im Stand der Technik Stabilisatorkombinationen aus UV-Absorbern und Radikalfängern beschrieben. Hierzu zählen insbesondere Kombinationen aus UV-Absorbern und HALS-Stabilisatoren (hindered amine light stabilizer). Derartige Kombinationen sind für bestimmte thermoplastische Matrices wie Polyolefine anwendbar und z.B. von Rajan et al. in J. of Appl. Pol. Sci. 2012, Vol. 124, 4007-4015, Moura et al. in Dyes and Pigments 1997, Vol. 33, No. 3, 173-196 und in US 20020028862 A1 beschrieben. Polycarbonat und ähnliche Ester bzw. Estercarbonate etc. sind jedoch mit Amin-basierten Systemen nicht verträglich. In einigen Dokumenten, wie in EP 0 924 248 A1, sind spezielle, für Polycarbonat verträgliche HALS-Systeme beschrieben. Jedoch sind derartige HALS-Systeme wegen der Umweltproblematik oder REACH-Registrierungsprozesse nicht mehr industriell verfügbar oder führen im Langzeitverhalten zu Molekulargewichtsabbau. Derartige Substanzen sind deshalb für die Verwendung in Polycarbonat ausgeschlossen.

Dem Fachmann ist ferner bekannt, dass sich durch Beschichtung von Polycarbonat die Witterungsbeständigkeit erhöhen lässt. Derartige Beschichtungen sind z.B. in in EP 3006527 A1, US 5041313 A, DE 3121385 A1, US 5391795 A, WO 2008/109072 A1 beschrieben. Allerdings konnte gezeigt werden, dass derartige Beschichtungen Farbverschiebungen und Auskreidungseffekte bei opaken Farben nur verzögern können. Auch bei derartigen Beschichtungen kommt es bei opaken Farben, die nicht schwarz sind, innerhalb von relativ kurzen Bewitterungszeiten zu signifikanten Veränderungen wie Glanzverlust, Farbverschiebung oder Ausbleicheffekten.

Es konnte gezeigt werden, dass die Kombination üblicherweise eingesetzter Titandioxidtypen mit verschiedenen Farbmitteln in einer Polycarbonat-Substratschicht mit Beschichtung hinsichtlich der Farbstabilität nach Bewitterung von unbeschichtetem Polycarbonat kaum zu unterscheiden ist. Es kommt zu massivem Auskreiden, Ausbleichen und Glanzverlust nach relativ kurzen Bewitterungszeiten.

Witterungsstabile thermoplastische Zusammensetzungen, insbesondere auf Basis von Polycarbonat oder PMMA, oder entsprechende Formkörper, die opak und farbig - L ≠ 0, a^{∗} ≠ 0, b^{∗} ≠ 0 -, also nicht schwarz - L = a^{∗}= b = 0 -, nicht weiß - L = 100, a^{∗} = b^{∗} = 0 - und nicht grau - alles mit L > 0 und <100, a^{∗} = b^{∗} = 0 - sind sowie eine hohe Witterungsstabilität aufweisen, sind somit im Stand der Technik nicht beschrieben.

Es bestand somit die Aufgabe, einen farbstabilen Formkörper aus einem thermoplastischen Material zu entwickeln, der
- eine Lichttransmission von < 0,5 %, bevorzugt < 0,1 % im Bereich von 380 bis 780 nm, bestimmt bei einer Schichtdicke von 4 mm nach DIN ISO 13468-2:2006 (D65, 10°), aufweist,
- Titandioxid enthält und auch nach Bewitterung eine hohe Farbbrillanz aufweist,
- auch sonst eine hohe Witterungsstabilität insbesondere gegen Sonnenlicht aufweist, d.h. eine hohe Farbstabilität aufweist, wobei die Veränderung der Farbwerte a^{∗}, b^{∗}, L^{∗} nach 2500 h, bevorzugt 2750 h künstlicher Bewitterung mit Xenon-Belichtung bei 0,75 W bei 340 nm gemäß ASTM G 155-13 bevorzugt ΔL^{∗} < 1,5, weiter bevorzugt < 1,0 und Δa^{∗} < 1,5, weiter bevorzugt < 1,0, noch weiter bevorzugt < 0,8 und Δb^{∗} < 1,5 sein sollte und es sollte visuell kein deutliches Ausbleichen bzw. kein Farbverlust zu erkennen sein,
- auf einer thermoplastischen Zusammensetzung auf Basis von Polycarbonat bzw. PMMA basiert,
- ein b^{∗} (Absolutwert) > 0,5, bevorzugt > 1, weiter bevorzugt > 15 und ein a^{∗} (Absolutwert) > 0,5, bevorzugt > 1, weiter bevorzugt > 30 aufweist,
- sowie möglichst auch eine hohe Schmelzestabilität aufweist, d.h. dass ΔMVR nach 30 min, bestimmt nach ISO 1133:2012-03 (bei einer Prüftemperatur von 300 °C, Masse 1,2 kg), < 1,5, insbesondere < 1,2 ist.
- Die Zusammensetzung muss außerdem unter den für Thermoplaste üblichen Temperaturen, d.h. bei Temperaturen oberhalb von 270 °C, wie z.B. bei 350 °C, verarbeitbar sein, ohne dass sich bei der Verarbeitung die Farbe oder andere physikalische Parameter deutlich verändern.

Es war völlig überraschend, dass bestimmte Titandioxidtypen bei beschichtetem Polycarbonat eine signifikant höhere Bewitterungsstabilität zeigen. Hiermit sind insbesondere eine deutlich geringere Farbverschiebung und ein geringerer Glanzverlust gemeint.

Die Farbbrillanz ist ein subjektiver Eindruck, den das Auge bzw. das menschliche Gehirn von der Farbe bekommt. Dieser Eindruck hängt mit einer hohen Farbsättigung als auch der spektralen Zusammensetzung der Farbe zusammen. Es ist auch wichtig, dass der Glanz gut ist. Neben Farbton und Helligkeit ist die Farbbrillanz eine der von den Menschen als wesentlich empfundenen Eigenschaften einer Farbe.

Die Aufgabe konnte somit überraschenderweise gelöst werden durch einen

### Mehrschichtkörper, umfassend

a) eine Substratschicht mit einer Lichttransmission im Bereich von 380 bis 780 nm von weniger als 0,5 %, bevorzugt weniger als 0,10 %, bestimmt bei einer Schichtdicke von 4 mm nach DIN ISO 13468-2:2006 (D65, 10°),
   bestehend aus einer thermoplastischen Zusammensetzung auf Basis von Polymethylmethacrylat oder aromatischem Polycarbonat, bevorzugt auf Basis von aromatischem Polycarbonat,
   enthaltend
   i) Weißpigment Titandioxid, wobei das in der Zusammensetzung der Basisschicht enthaltene Titandioxid einen Rutil-Anteil von mindestens 60 Gew.-% aufweist und eine mittlere Partikelgröße D₅₀, bestimmt mittels Rasterelektronenmikroskopie, von ≥ 0,3 µm aufweist und
      wobei das Titandioxid eine Beschichtung aufweist, welche Siliciumdioxid, Aluminiumoxid und ggf. Titandioxid enthält, und wobei das Verhältnis der Summe von Aluminium- und Siliciumanteil in Atom-% in der Beschichtung zum Titananteil in Atom-% in der Beschichtung größer als 5:1 ist,
   ii) mindestens zwei Farbmittel, welche entweder ein organisches Farbmittel und ein anorganisches Farbmittel oder zwei organische Farbmittel sind, wobei das anorganische Farbmittel kein Titandioxid und kein Ruß ist,
b) ggf. eine Primerschicht und
c) eine Decklackschicht,
   wobei in der Primerschicht und/oder der Decklackschicht mindestens ein UV-Absorber enthalten ist.

Die Anteile der Elemente in Atom-% in der Beschichtung sind bevorzugt mittels Röntgenphotonenelektronenspektroskopie bestimmt. Es versteht sich, dass je nach Dicke der Beschichtung der Detektionswinkel entsprechend zu wählen ist, so dass die gesamte Beschichtungsschicht erfasst wird. Die Präparation und Probenhandhabung erfolgt bevorzugt gemäß ISO 18117:2009-06 und ISO 18116:2005-08.

Die Aufgabe wird außerdem gelöst durch die Verwendung von
dem Weißpigment Titandioxid, aufweisend einen Rutil-Anteil von mindestens 60 Gew.-% und eine mittlere Partikelgröße D₅₀, bestimmt mittels Rasterelektronenmikroskopie, von ≥ 0,3 µm, und aufweisend eine Beschichtung, welche Siliciumdioxid, Aluminiumoxid und ggf. Titandioxid enthält, wobei das Verhältnis der Summe von Aluminium- und Siliciumanteil in Atom-% in der Beschichtung zum Titananteil in Atom-% in der Beschichtung, bevorzugt bestimmt mittels Röntgenphotonenelektronenspektroskopie, größer als 5:1 ist,
in einer Substratschicht in Kombination mit einer Beschichtung, umfassend eine Decklackschicht und ggf. eine Primerschicht, wobei in der Decklackschicht und/oder der Primerschicht mindestens ein UV-Absorber enthalten ist,
zur Erzielung von Bewitterungsstabilität, ausgedrückt durch eine Veränderung der Farbwerte a^{∗}, b^{∗}, L^{∗} nach 2500 h, bevorzugt 2750 h, noch weiter bevorzugt 3000 h, künstlicher Bewitterung mit Xenon-Belichtung bei 0,75 W bei 340 nm gemäß ASTM G 155-13 von ΔL^{∗} < 1,5, weiter bevorzugt < 1,0 und Δa^{∗} < 1,5, weiter bevorzugt < 1,0, noch weiter bevorzugt < 0,8 und Δb^{∗} < 1,5, von farbigen Mehrschichtkörpern, umfassend
   a) die Substratschicht mit einer Lichttransmission im Bereich von 380 bis 780 nm von weniger als 0,5 %, bestimmt bei einer Schichtdicke von 4 mm nach DIN ISO 13468-2:2006 (D65, 10°), bestehend aus einer thermoplastischen Zusammensetzung auf Basis von Polymethylmethacrylat oder aromatischem Polycarbonat und enthaltend
      mindestens zwei Farbmittel, welche entweder ein organisches Farbmittel und ein anorganisches Farbmittel oder zwei organische Farbmittel sind, wobei das anorganische Farbmittel kein Titandioxid und kein Ruß ist,
   b) die Beschichtung, umfassend die Decklackschicht und ggf. die Primerschicht.

"Mehrschichtkörper" im erfindungsgemäßen Sinn bedeutet "mindestens zwei Schichten", nämlich eine Substratschicht und eine Decklackschicht, die dazu bestimmt ist, auf der Seite des Mehrschichtkörpers zu liegen, die im Gebrauchszustand "nach außen", zur Lichtquelle hin, d.h. zur Sonne hin, orientiert zu sein. Zusätzlich kann zu der Decklackschicht noch eine Primerschicht vorliegen, die zwischen Decklackschicht und Substratschicht liegt. Es können aber auch noch weitere Schichten, insbesondere Schutz- und Funktionsschichten vorliegen, insbesondere eine zweite Decklackschicht und ggf. Primerschicht auf der gegenüberliegenden Seite der Substratschicht.

Farbig ist alles, was nicht weiß, schwarz oder grau - ohne jeglichen Farbstich- ist.

Die erfindungsgemäßen Mehrschichtkörper sind farbig.

Die angegebenen Eigenschaften des Titandioxids beziehen sich auf alles Titandioxid, welches in der Zusammensetzung enthalten ist. Dabei kann es sich um Titandioxid aus einer Charge handeln, als auch um Titandioxid aus verschiedenen Chargen oder sogar verschiedenen Produkten. In diesen Fällen werden die Mittelwerte zu den jeweiligen Eigenschaften gebildet. Es versteht sich somit z.B., dass neben dem in den Beispielen eingesetzten Altiris^{®} 800 der Firma Huntsman z.B. auch Kronos 2230 enthalten sein kann, solange das Eigenschaftsprofil aus den gemittelten Werten dem anspruchsgemäßen entspricht. Besonders bevorzugt sind maximal 40 Gew.-%, weiter bevorzugt maximal 25 Gew.-%, noch weiter bevorzugt maximal 10 Gew.-%, besonders bevorzugt maximal 5 Gew.-%, ganz besonders bevorzugt maximal 2 Gew.-%, eines Titandioxids, bezogen auf die Gesamtmenge an Titandioxid in der erfindungsgemäßen Zusammensetzung, enthalten, welches für sich alleine, also ohne Berechnung auf die Mischung, nicht die nachfolgend genannten Eigenschaften, insbesondere die gemäß Patentanspruch 1, aufweist.

Das Titandioxid hat eine mittlere Partikelgröße D₅₀, bestimmt mittels Rasterelektronenmikroskopie (STEM), von ≥ 0,3 µm, bevorzugt > 0,40 µm, weiter bevorzugt > 0,5 µm, besonders bevorzugt > 0,55 µm, besonders bevorzugt 0,6 bis 1,2 µm, äußerst bevorzugt 0,65 bis 1,15 µm.

Das Titandioxid, das in der Zusammensetzung der Substratschicht enthalten ist, ist zu mindestens 60 Gew.-%, bevorzugt zu mindestens 70 Gew.-%, weiter bevorzugt zu mindestens 80 Gew.-%, noch weiter bevorzugt zu mindestens 90 Gew.-%, besonders bevorzugt zu mindestens 95 Gew.-%, ganz besonders bevorzugt zu mindestens 99 Gew.-%, jeweils bezogen auf die gesamten Kristallstrukturen des Titandioxids, ein Titandioxid vom Rutiltyp. Äußerst bevorzugt ist das Titandioxid zu 100 Gew.-% vom Rutiltyp.

Das Titandioxid, das in der Zusammensetzung der Substratschicht enthalten ist, weist eine Beschichtung auf, welche Siliciumdioxid und Aluminiumoxid sowie ggf. Titandioxid enthält, wobei das Verhältnis der Summe von Aluminium- und Siliciumanteil in Atom-% in der Beschichtung zum Titananteil in Atom-% in der Beschichtung größer als 5:1, bevorzugt größer als 10:1, weiter bevorzugt mindestens 15:1 noch weiter bevorzugt mindestens 20:1 ist. Bevorzugt beträgt das Verhältnis der Summe von Aluminium- und Siliciumanteil in Atom-% in der Beschichtung zum Titananteil in Atom-% in der Beschichtung bei einem Detektionswinkel von 10° mindestens 15:1, bei einem Detektionswinkel von 45° mindestens 19:1, weiter bevorzugt mindestens 20:1 und bei einem Detektionswinkel von 80° ebenfalls bevorzugt mindestens 20:1. Es versteht sich, dass die Beschichtung selbst auch frei von jeglichem Titandioxid sein kann. Die Beschichtung kann eine Mischschicht, enthaltend die oben genannten Oxide sein, oder eine Abfolge der unterschiedlichen Oxid-Schichten. Bevorzugt weist die Beschichtung eine Siliciumdioxid- und eine Aluminiumoxid-Schicht auf, wobei weiter bevorzugt die Siliciumdioxid-Schicht zwischen dem Titandioxid-Kern und der Aluminiumoxid-Schicht liegt. Ganz besonders bevorzugt weist das Titandioxid keine weiteren anorganischen Schichten als den Titandioxid-Kern, die Siliciumdioxid-Schicht und die Aluminiumoxid-Schicht auf, welche jedoch durch Elemente wie Kohlenstoff, Titan, Natrium, Kalium etc. verunreinigt sein können. Das Titandioxid kann aber neben anorganischen Schichten noch eine organische Schicht enthalten. Hierbei kann es sich um Polysiloxane und/oder Polyole handeln. Die Beschichtung zählt zu der Gesamtmenge des Titandioxids in der thermoplastischen Zusammensetzung, so dass der tatsächliche Anteil von Titandioxid in der Komponente Titandioxid in der Zusammensetzung geringer ist. Wenn die Zusammensetzung z.B. 1,5 Gew.-% Titandioxid enthält, enthält die Zusammensetzung tatsächlich weniger als 1,5 Gew.-% reines Titandioxid, da die Beschichtung, enthaltend Aluminiumoxid und Siliciumdioxid, auch in genannte Menge reinzählt. Bevorzugt beträgt der Anteil an reinem Titandioxid an der Komponente Titandioxid mindestens 90 Gew.-%, bevorzugt mindestens 92 Gew.-%, besonders bevorzugt mehr als 93 Gew.-%, bestimmt nach ASTM D 1394:2014.

Bevorzugt ist das für die Zusammensetzung der Substratschicht eingesetzte Titandioxid ausschließlich solches, das die in den vier Absätzen zuvor genannten Merkmale aufweist.

Der Anteil von Titandioxid inklusive seiner Beschichtung in der thermoplastischen Zusammensetzung der Substratschicht beträgt bevorzugt 0,05 bis 2,5 Gew.-%, weiter bevorzugt 0,1 bis 2,0 Gew.-%, noch weiter bevorzugt 0,10 bis 1,5 Gew.-%.

Das erfindungsgemäß eingesetzte Titandioxid ist ein Weißpigment, Ti(IV)O₂. Farbige Titandioxide enthalten neben Titan noch Elemente wie Sb, Ni, Cr in signifikanten Mengen, so dass sich ein anderer Farbeindruck als "weiß" ergibt. Es versteht sich, dass beim Weißpigment Titandioxid auch Spuren anderer Elemente als Verunreinigungen enthalten sein können. Diese Mengen sind jedoch so gering, dass das Titandioxid hierdurch keinen Farbstich bekommt.

Die Beschichtungsschicht weist bevorzugt eine Dicke von 5 bis 20 µm auf, besonders bevorzugt 8 bis 17 nm, ganz besonders bevorzugt von 10 bis 15 nm.

Die Zusammensetzungen der Substratschicht enthalten mindestens ein organisches Farbmittel. Dieses ist bevorzugt ausgewählt aus der Gruppe, bestehend aus solchen, die auf Anthrachinon-, Perinon-, Pyrazolon- Indanthron-, Methin-, Phtalocyanin-Strukturen, auf Azo- oder Diazofarbstoffen basieren.

Weiter bevorzugte organische Farbmittel sind solche, ausgewählt aus den unten dargestellten Strukturen (1) bis (18), wobei in den erfindungsgemäßen opaken thermoplastischen Polymer-Zusammensetzungen für die Substratschicht bevorzugt mindestens ein organisches Farbmittel dieser Strukturen enthalten ist. Es können jedoch auch noch ein oder mehrere weitere Farbmittel enthalten sein, die aus derselben Gruppe Farbmittel und/oder allgemein aus der Gruppe der Farbmittel ausgewählt sind.

Für die organischen Farbmittel gilt:
Besonders bevorzugte organische grüne Farbmittel sind Farbmittel der Formeln (1) und (2a/2b/2c):

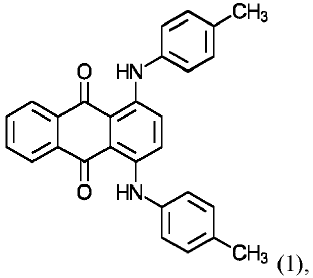

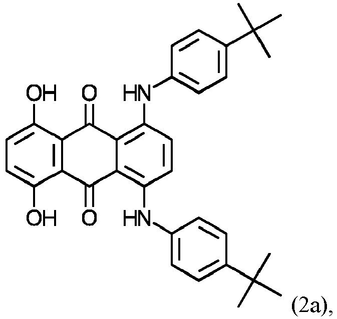

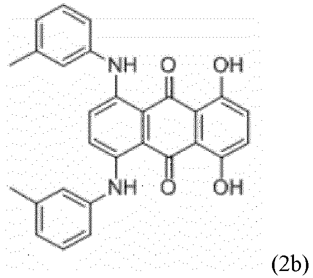

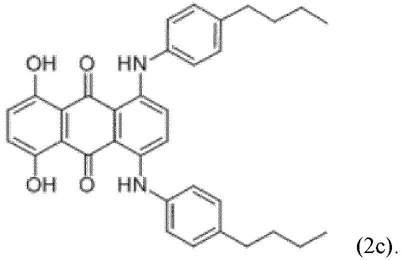

Das Farbmittel der Formel (1) ist unter dem Namen Macrolex Grün 5B der Firma Lanxess Deutschland GmbH bekannt, Color Index-Nummer 61565, CAS-Nummer: 128-90-3, und ist ein Anthrachinonfarbstoff.

Farbmittel der Formeln (2a), (2b) und (2c) sind unter dem Namen Macrolex Grün G (Solvent Green 28) bekannt.

Blaue Farbmittel, die eingesetzt werden, sind bevorzugt Farbmittel der Formeln (3) und/oder (4a/4b): 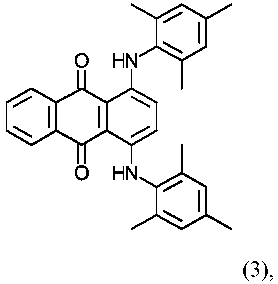 erhältlich unter dem Namen "Keyplast Blue KR", CAS-Nummer 116-75-6, 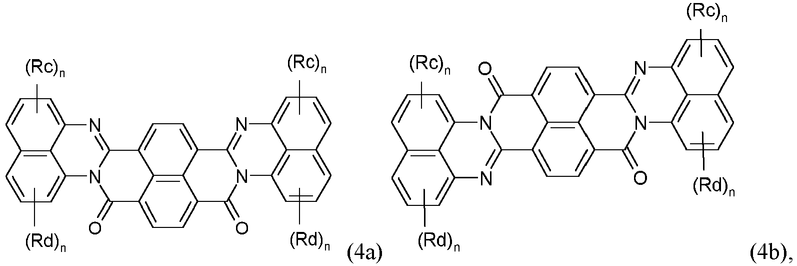 wobei
- Rc und Rd unabhängig voneinander für einen linearen oder verzweigten Alkylrest oder Halogen stehen, bevorzugt für Methyl, Ethyl, Propyl, Isopropyl, Butyl, Isobutyl, tert.-Butyl, Pentyl, Neopentyl, Hexyl, Thexyl oder Cl, weiter bevorzugt für Methyl, Cl und besonders bevorzugt für Cl steht,
- n unabhängig vom jeweiligen R für eine natürliche Zahl zwischen 0 und 3 steht, wobei der Rest für n=0 Wasserstoff ist.

In einer bevorzugten Ausführungsform sind Rc und/oder Rd Cl und stehen in o- und/oder p-Positionen zu den Kohlenstoffatomen, welche die Aminfunktionalitäten tragen, wie z.B. diorthochlornapthalino-, di-ortho, mono-para-chlornaphthalino, sowie mono-ortho-naphthalino. Ferner stellen in einer bevorzugten Ausführungsform Rc und Rd jeweils einen tert-Butylrest dar, welcher sich bevorzugt in meta-Position zu den Kohlenstoffatomen, welche die Stickstofffunktionalitäten tragen, befindet.

In einer besonders bevorzugten Ausführungsform ist in allen Ringen n = 0, so dass alle Rc und Rd = H sind.

Ferner können als blaue Farbmittel eingesetzt werden:
Farbmittel der Formel (5), erhältlich unter dem Namen "Macrolex Blue 3R Gran", 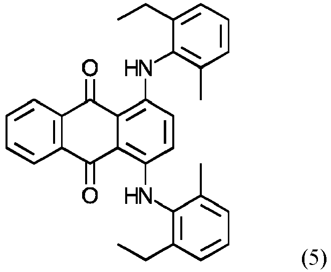 und/oder Farbmittel der Formel (6), erhältlich unter dem Namen "Macrolex Blue RR" (CAS 32724-62-2; Solvent Blue 97; C.I. 615290),

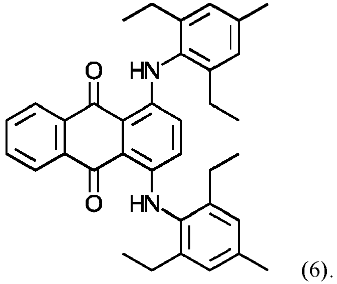

Als rotes Farbmittel wird bevorzugt ein Farbmittel der Formel (7), erhältlich unter dem Namen "Macrolex Red 5B", mit der CAS-Nummer 81-39-0, eingesetzt:

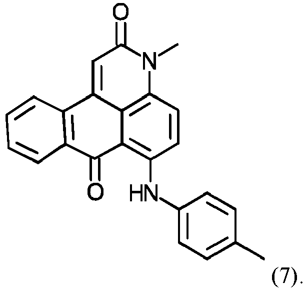

Weiterhin können Farbmittel der Formeln (8) mit der CAS-Nummer 71902-17-5 und (9) mit der CAS-Nummer 89106-94-5 eingesetzt werden:

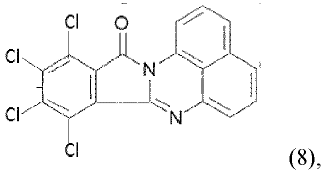

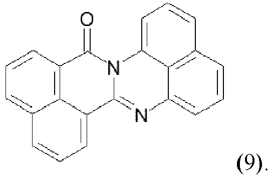

Als violette Farbmittel werden bevorzugt Farbmittel der Formeln (10) mit der CAS-Nummer 61951-89-1, (11), erhältlich unter dem Namen "Macrolex Violet B" von der Lanxess AG, mit der CAS-Nummer 81-48-1 oder (12a/12b), eingesetzt: 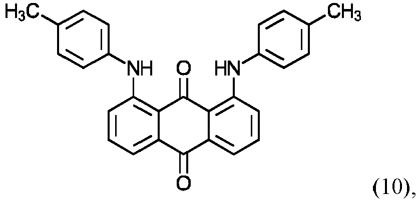 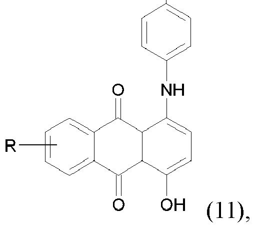 wobei R ausgewählt ist aus der Gruppe, die aus H- und p-Methylphenylamin-Rest besteht; bevorzugt ist R = H; 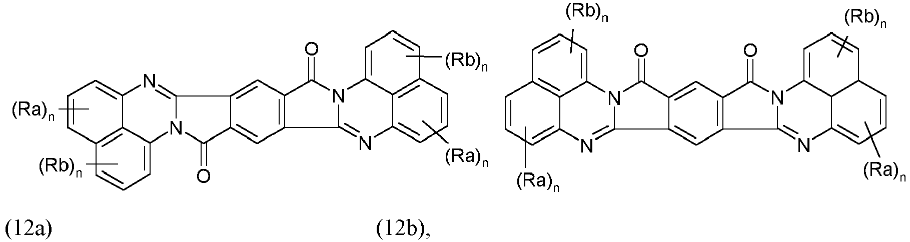 wobei
- Ra und Rb unabhängig voneinander für einen linearen oder verzweigten Alkylrest oder Halogen stehen, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl steht,
- n unabhängig vom jeweiligen R für eine natürliche Zahl zwischen 0 und 3 steht, wobei der Rest für n=0 Wasserstoff ist.

In einer bevorzugten Ausführungsform sind Ra und/oder Rb Cl und stehen in o- und/oder p-Positionen zu den Kohlenstoffatomen, welche die Aminfunktionalitäten tragen, wie z.B. diorthochlornapthalino-, di-ortho, mono-para-chlornaphthalino, sowie mono-ortho-naphthalino. Ferner stellen in einer bevorzugten Ausführungsform Ra und Rb jeweils einen tert.-Butylrest dar, welcher sich bevorzugt in meta-Position zu den Kohlenstoffatomen, welche die Stickstofffunktionalitäten tragen, befindet.

In einer besonders bevorzugten Ausführungsform ist in allen Ringen n = 0, so dass alle Ra und Rb = H sind.

Ferner können Farbmittel eingesetzt werden, die der Formel (13), erhältlich unter dem Namen "Macrolex RedViolet R", CAS-Nummer 6408-72-6, entsprechen:

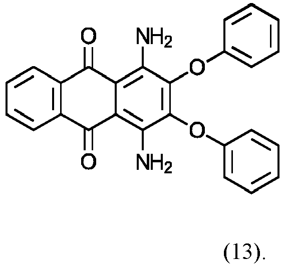

Als gelbe Farbmittel werden bevorzugt Farbmittel der Formeln (14), erhältlich unter dem Namen "Macrolex Gelb 3G", mit der CAS-Nummer 4702-90-3 und/oder (15), erhältlich unter dem Namen "Macrolex Orange 3G" (CAS-Nummer 6925-69-5, C.I. 564100), eingesetzt:

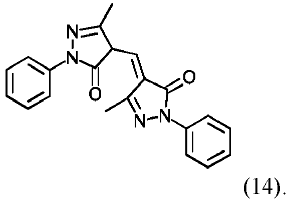

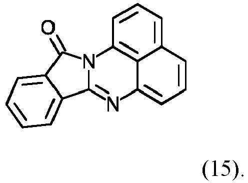

Ferner ist es möglich, Farbmittel der Formeln (16), erhältlich unter dem Namen "Oracet Yellow 180" mit der CAS-Nummer 13676-91-0, (17) mit der CAS-Nummer 30125-47-4 und/oder (18), erhältlich unter dem Namen "Oracet Orange 220; Solvent Orange 116" mit der CAS-Nummer 669005-94-1, einzusetzen.

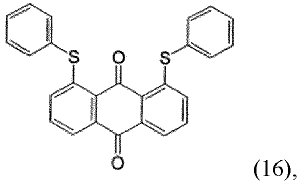

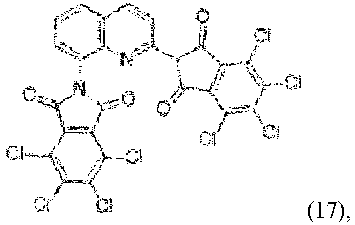

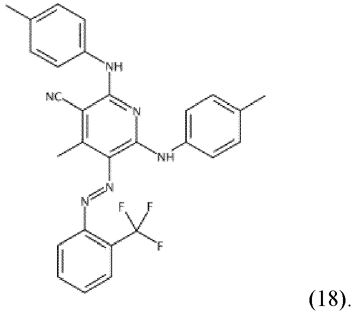

Besonders bevorzugt im Rahmen der vorliegenden Erfindung sind Kombinationen von mindestens einem Farbmittel aus den zuvor genannten, insbesondere den organischen Farbmitteln (1) bis (18) und/oder den Farbmitteln Amaplast Gelb GHS (CAS 13676-91-0; Solvent Yellow 163; C:I: 58840); Heliogen Blau-Typen (z.B. Heliogen Blau K 6911; CAS 147-14-8; Pigment Blue 15:1; C.I. 74160) sowie Heliogen Grün-Typen (wie z.B. Heliogen Grün K 8730; CAS 1328-53-6; Pigment Green 7; C.I. 74260) mit erfindungsgemäß einzusetzendem Titandioxid-Pigment und bevorzugt mindestens einem weiteren organischen Farbmittel und/oder anorganischen Farbmittel.

Weitere Farbmittel sind bevorzugt auf Anthrachinonbasis, auf Perinonbasis, auf Phthalocyaninbasis oder von diesen Strukturen abgeleitete Farbmittel. Besonders bevorzugte Farbmittel sind in WO 2012/080395 A1 beschrieben. Ganz besonders bevorzugt enthält die thermoplastische Zusammensetzung der Substratschicht neben dem Titandioxid-Pigment nur ein oder mehrere Farbmittel aus der Gruppe der Farbmittel der Formeln (1) bis (18), Amaplast Gelb GHS, der Heliogen Blau-Typen und/oder der Heliogen Grün-Typen, aber keine weiteren Farbmittel, insbesondere auch keine sonstigen Pigmente und kein Ruß.

Die im Rahmen der vorliegenden Erfindung offenbarten organischen Farbmittel, insbesondere die der Formeln (1) bis (18), werden bevorzugt, bezogen auf die jeweilige Einzelkomponente, in Mengen von 0,0010 Gew.-% bis 1,00 Gew.-%, bevorzugt von 0,005 Gew.-% bis 0,80 Gew.-% und besonders bevorzugt von 0,01 Gew.-% bis 0,70 Gew.-% in thermoplastischen Polymer-Zusammensetzungen verwendet. Die Gesamtkonzentration an organischen und anorganischen Farbmittel, einschließlich Pigmenten, außer TiO₂, beträgt weiter bevorzugt 0,012 bis 1,2 Gew-% insbesondere bevorzugt 0,012 bis 1,0 Gew.-%, bezogen auf eine resultierende Polymer-Zusammensetzung enthaltend die erfindungsgemäßen organischen Farbmittel oder organischen Farbmittelkombinationen.

Die Zusammensetzungen enthalten bevorzugt ≥0,001 Gew.-%, bevorzugt ≥ 0,01 Gew.-%, organische Farbmittel.

Grundsätzlich geeignete anorganische Farbmittel sind z.B. Mischphasenoxidpigmente wie Eisenoxide, Titanate wie Cr-, Sb-, Zn-, Ni-Titanate, Spinellpigmente, Silikat-basierte Pigmente wie Aluminiumsilikate, z.B. Ultramarin.

Die Substratschicht kann neben dem aromatischen Polycarbonat oder dem Polymethylmethacrylat, auf dem sie basiert, noch als Blendpartner einen oder mehrere weitere thermoplastische Kunststoffe enthalten, bevorzugt aromatisches Polycarbonat, einschließlich Copolycarbonat, Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Polyacrylat, Copolyacrylat, Polymethyacrylat, Copolymethacrylat wie z.B. Poly- oder Copolymethylmethacrylat (wie PMMA), Copolymere mit Styrol wie z.B. transparentes Polystyrolacrylnitril (PSAN), thermoplastische Polyurethane, Polymere auf Basis von zyklischen Olefinen (z.B. TOPAS^{®}, ein Handelsprodukt der Firma Ticona), bevorzugt aromatisches Polycarbonat, Copolycarbonat, Polyestercarbonat, aromatische Polyester, Polymethylmethacrylat oder Mischungen der genannten Komponenten, und besonders bevorzugt aromatisches Polycarbonat und/oder Copolycarbonat. Der thermoplastische Kunststoff bildet mit allen übrigen Komponenten der Substratschicht 100 Gew.-%. Bevorzugt sind 0 bis maximal 5,0 Gew.-% Blendpartner enthalten, besonders bevorzugt gar kein Blendpartner. Polycarbonat einschließlich Copolycarbonat bzw. PMMA kommen als Blendpartner in Betracht, wenn das Basispolymer der thermoplastischen Zusammensetzung das jeweils andere Polymer ist.

Geeignete Polycarbonate für die Herstellung der erfindungsgemäßen Kunststoffzusammensetzung sind alle bekannten Polycarbonate. Dies sind Homopolycarbonate sowie Copolycarbonate. Sofern im Rahmen der vorliegenden Erfindung von "Polycarbonaten" gesprochen wird, sind bevorzugt aromatische Polycarbonate gemeint. Besonders bevorzugt sind Polyestercarbonate von den Polycarbonaten im Sinne der Erfindung ausgenommen.

Die geeigneten Polycarbonate haben bevorzugt mittlere Molekulargewichte M̅_{w} von 10.000 g/mol bis 40.000 g/mol, vorzugsweise von 14.000 g/mol bis 35.000 g/mol und besonders bevorzugt von 16.000 g/mol bis 32.000 g/mol. Hierbei werden die Werte M̅_{w} durch Gelpermeationschromotographie ermittelt, unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist auch beim Kalibrieren Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm.

Konzentration der Lösungen: 0,2 Gew.-%. Flussrate: 1,0 ml/min, Temperatur der Lösungen: 30°C. Detektion mit Hilfe eines Brechungsindex(RI)-Detektors.

Die Schmelzevolumenfließrate (MVR), bestimmt gemäß ISO 1133-1:2012-03 bei 300°C und 1,2 kg Belastung, beträgt 7 bis 40 cm³/(10 min), bevorzugt 8 bis 35 cm³/(10 min).

Die Herstellung der Polycarbonate erfolgt vorzugsweise nach dem Phasengrenzflächenverfahren oder dem Schmelze-Umesterungsverfahren, welche mannigfaltig in der Literatur beschrieben werden.

Zum Phasengrenzflächenverfahren sei beispielhaft auf H. Schnell, "Chemistry and Physics of Polycarbonates", Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP 0 517 044 A1 verwiesen.

Das Schmelze-Umesterungsverfahren ist beispielsweise in der "Encyclopedia of Polymer Science", Vol. 10 (1969), Chemistry and Physics of Polycarbonates, Polymer Reviews, H. Schnell, Vol. 9, John Wiley and Sons, Inc. (1964) sowie in den Patentschriften DE 10 31 512 A und US 6,228,973 B1 beschrieben.

Die Polycarbonate werden bevorzugt durch Reaktionen von Bisphenolverbindungen mit Kohlensäureverbindungen, insbesondere Phosgen, oder beim Schmelzeumesterungsprozess von Diphenylcarbonat bzw. Dimethylcarbonat, dargestellt.

Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan, z.B. Apec^{®} der Covestro Deutschland AG, besonders bevorzugt.

Diese und weitere Bisphenol- bzw. Diolverbindungen, die sich für die Polycarbonatsynthese einsetzen lassen, sind unter anderem offenbart in WO 2008/037364 A1 (s.7, Z. 21 bis s. 10, Z. 5), EP 1 582 549 A1 ([0018] bis [0034]), WO 2002/026862 A1 (S. 2, Z. 20 bis S. 5, Z. 14), WO 2005/113639 A1 (S. 2, Z.1 bis S. 7, Z. 20).

Die Polycarbonate können linear oder verzweigt sein. Es können auch Mischungen aus verzweigten und unverzweigten Polycarbonaten eingesetzt werden.

Geeignete Verzweiger für die Herstellung von verzweigten Polycarbonaten sind aus der Literatur bekannt und beispielsweise beschrieben in den Patentschriften US 4,185,009 B und DE 25 00 092 A1 (3,3-Bis-(4-hydroxyaryl-oxindole, s. jeweils gesamtes Dokument), DE 42 40 313 A1 (s. S. 3, Z. 33 bis 55), DE 19 943 642 A1 (s. S. 5, Z. 25 bis 34) und US 5,367,044 B sowie in hierin zitierter Literatur.

Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP 1 506 249 A1 beschrieben sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Die thermoplastischen Polymer-Zusammensetzungen können neben den erfindungsgemäßen Farbmitteln und Titandioxid optional noch eine oder mehrere weitere Komponenten enthalten. Hierzu zählen:
UV-Absorber (Komponente iii). Diese sind, sofern enthalten, bevorzugt in Mengen von 0,10 Gew% bis 1,00 Gew.-%, weiter bevorzugt bis 0,6 Gew.-%, noch weiter bevorzugt 0,10 Gew.-% bis 0,50 Gew.-% sowie ganz besonders bevorzugt 0,10 Gew.-% bis 0,30 Gew.-% enthalten.

Geeignete UV-Absorber sind beispielsweise beschrieben in der EP 1 308 084 A1, in der DE 102007011069 A1 sowie in der DE 10311063 A1.

Folgende UV-Absorber sind beispielsweise geeignet: Hydroxy-Benzotriazole, wie 2-(3',5'-Bis-(1,1-dimethylbenzyl)-2'-hydroxy-phenyl)-benzotriazol (Tinuvin^{®} 234, BASF SE, Ludwigshafen), 2-(2'-Hydroxy-5'-(tert.-octyl)-phenyl)-benzotriazol (Tinuvin^{®} 329, BASF SE, Ludwigshafen), 2-(2'-Hydroxy-3'-(2-butyl)-5'-(tert.butyl)-phenyl)-benzotriazol (Tinuvin^{®} 350, BASF SE, Ludwigshafen), Bis-(3-(2H-benztriazolyl)-2-hydroxy-5-tert.-octyl)methan, (Tinuvin^{®} 360, BASF SE, Ludwigshafen), (2-(4,6-Diphenyl-1,3,5-triazin-2-yl)-5-(hexyloxy)-phenol (Tinuvin^{®} 1577, BASF SE, Ludwigshafen), die Benzophenone 2,4-Dihydroxy-benzophenon (Chimasorb^{®} 22, BASF SE, Ludwigshafen) oder 2-Hydroxy-4-(octyloxy)-benzophenon (Chimassorb^{®} 81, BASF SE, Ludwigshafen), Cyano-3,3-diphenyl-2-propensäure, 2,2-Bis[[(2-cyano-1-oxo-3,3-diphenyl-2-propenyl)oxy]-methyl]-1,3-propandiylester (9CI) (Uvinul^{®} 3030, BASF SE, Ludwigshafen), 2-[2-Hydroxy-4-(2-ethylhexyl)oxy]phenyl-4,6-di(4-phenyl)phenyl-1,3,5-triazin (CGX UVA 006, BASF SE, Ludwigshafen), 2-(5-Chloro-2H-benzotriazol-2-yl)-6-(1,1-dimethylethyl)-4-methyl-phenol (Tinuvin 326) oder Tetraethyl-2,2'-(1,4-phenylen-dimethyliden)-bismalonat (Hostavin^{®} B-Cap, Clariant AG). Es können auch Mischungen dieser Ultraviolett-Absorber eingesetzt werden.

In einer besonders bevorzugten Ausführungsform enthält die Polymerzusammensetzung der Substratschicht mindestens einen UV-Absorber als Komponente iii). Ganz besonders bevorzugt enthält die Mischung 2-(5-Chloro-2H-benzotriazol-2-yl)-6-(1,1-dimethylethyl)-4-methyl-phenol (Tinuvin 326) oder 2,4,6-Tris(2-hydroxy-4-hexyloxy-3-methylphenol)-1,3,5-triazin, bekannt unter dem Handelsnamen ADK STAB LA-F70 der Firma Adeka Palmerole.

Bevorzugt enthält die Polymerzusammensetzung mindestens einen Thermostabilisator als Komponente iv). Die Menge an Thermostabilisator beträgt bevorzugt bis 0,20 Gew.-%, weiter bevorzugt 0,01 bis 0,10 Gew.-%, noch weiter bevorzugt 0,01 bis 0,05 Gew.-%, besonders bevorzugt 0,015 bis 0,040 Gew.-%, bezogen auf die Gesamtzusammensetzung.

Als solche bevorzugt sind Phosphite und Phosphonite sowie Phosphine. Beispiele sind Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di- cumylphenyl)pentaerythritoldiphosphit, Bis(2,6-di-tert-butyl-4-methylphenyl)penta-erythritol-diphosphit, Diisodecyloxypentaerythritoldiphosphit, Bis(2,4-di-tert-butyl-6-methylphenyl)-pentaerythritoldiphosphit, Bis(2,4,6-tris(tert-butylphenyl)pentaerythritoldiphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)pentaerythritol-diphosphit, Triphenylphosphin (TPP), Trialkylphenylphosphin, Bisdiphenylphosphino-ethan oder ein Trinaphthylphosphin. Insbesondere bevorzugt werden Triphenylphosphin (TPP), Irgafos^{®} 168 (Tris(2,4-di-tert-butyl-phenyl)-phosphit) oder Tris(nonylphenyl)phosphit oder deren Mischungen eingesetzt.

Ferner können Alkylphosphate, z. B. Mono-, Di- und/oder Trihexylphosphat, Triisoctylphosphat und/oder Trinonylphosphat zugegeben werden. Bevorzugt wird als Alkylphosphat Triisooctylphosphat (Tris-2-ethyl-hexyl-phosphat) verwendet. Es können auch Mischungen aus verschiedenen Mono-, Di- und Trialkylphosphaten verwendet werden. Sofern Alkylphosphate eingesetzt werden, werden diese bevorzugt in einer Menge von weniger als 0,05 Gew.-%, weiter bevorzugt von 0,00005 bis 0,05 Gew.-%, noch weiter bevorzugt von 0,0002 bis 0,05 Gew.-%, besonders bevorzugt von 0,0005 bis 0,03 Gew.-%, ganz besonders bevorzugt von 0,001 bis 0,0120 Gew.-%, bezogen auf die Gesamtzusammensetzung, eingesetzt.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox^{®} 1010 (Pentaerythrit-3-(4-hydroxy-3,5-di-tert-butylphenyl)propionat; CAS: 6683-19-8) und Irganox 1076^{®} (2,6-Di-tert-butyl-4-(octadecanoxycarbonylethyl)phenol) eingesetzt.

Die Zusammensetzung enthält bevorzugt als Komponente v Entformungsmittel, weiter bevorzugt auf Basis eines Fettsäureesters, noch weiter bevorzugt auf Basis eines Stearinsäureesters, insbesondere bevorzugt auf Pentaerythritbasis. Besonders bevorzugt werden Pentaerythrittetrastearat (PETS) und/oder Glycerinmonostearat (GMS) eingesetzt. Sofern ein oder mehrere Entformungsmittel eingesetzt werden, beträgt die Menge bevorzugt bis 1,0 Gew.-% (einschließlich), weiter bevorzugt 0,01 bis 0,50 Gew.-%, besonders bevorzugt 0,01 bis 0,40 Gew.-%, jeweils bezogen auf die Gesamtzusammensetzung.

Optional können als Komponente vi Additive, ggf. neben dem einen oder mehreren UV-Absorbern und/oder Thermostabilisatoren und/oder Entformungsmitteln gemäß den Komponenten iii bis v, eingesetzt werden, vorzugsweise 0,0 Gew.-% bis 10,0 Gew.-%, weiter bevorzugt bis 5,0 Gew.-%, noch weiter bevorzugt 0,01 Gew.-% bis 3,00 Gew.-%, besonders bevorzugt 0,01 bis 1,00 Gew.-% weitere Additive. Die Komponenten iii bis v sind ausdrücklich aus dieser Komponente vi ausgenommen. Selbiges gilt für die Komponente i (Titandioxid) und ii (organisches Farbmittel). Solche sind z.B. in EP-A 0 839 623, WO-A 96/15102, EP-A 0 500 496 oder "Plastics Additives Handbook", Hans Zweifel, 5th Edition 2000, Hanser Verlag, München beschrieben, z.B. Flammschutzmittel, Antidrippingmittel, optische Aufheller, Fließverbesserer oder Verarbeitungshilfsmittel. Die bereits als Komponenten der vorliegenden Erfindung offenbarten Substanzen sind in diesem Zusammenhang ausdrücklich nicht Bestandteil dieser Komponente.

Die Polymer-Zusammensetzung enthält in jedem Fall zwei Farbmittel, wovon von den mindestens zwei Farbmitteln keines Ruß ist. Die Polymer-Zusammensetzung kann aber optional Ruß als weiteres Additiv enthalten. Der Ruß liegt in diesem Fall bevorzugt fein dispergiert in der organischen Polymermatrix vor und ist bevorzugt nanoskalig. Geeignete Ruße weisen eine durchschnittliche Teilchengröße auf von bevorzugt weniger als 100 nm, weiter bevorzugt weniger als 75 nm, noch weiter bevorzugt weniger als 50 nm und besonders bevorzugt weniger als 40 nm, wobei die durchschnittliche Teilchengröße vorzugsweise größer als 0,5 nm, weiter bevorzugt größer als 1 nm und besonders bevorzugt größer als 5 nm ist. Die Teilchengröße wird durch TEM (Transmissionselektronenmikroskopie) bestimmt. Ruß ist explizit von den (sonstigen) organischen und anorganischen Farbmitteln, die in den erfindungsgemäßen Zusammensetzungen enthalten sein können, ausgenommen. Die erfindungsgemäßen Zusammensetzungen enthalten bevorzugt weniger als 0,01 Gew.-%, weiter bevorzugt < 0,005 Gew.-%, noch weiter bevorzugt < 0,001 Gew.-% Ruß, besonders bevorzugt sind sie frei von Ruß.

Die obigen Mengenangaben beziehen sich jeweils auf die gesamte Polymer-Zusammensetzung.

Die Herstellung der erfindungsgemäßen Polymer-Zusammensetzungen, enthaltend die oben genannten Komponenten erfolgt mit gängigen Einarbeitungsverfahren durch Zusammenführung, Vermischen und Homogenisieren, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind. Insbesondere können hierbei die Komponenten der erfindungsgemäßen Zusammensetzung durch bekannte Verfahren, wie unter anderem als Masterbatch, eingebracht werden.

Die Verwendung von Masterbatchen sowie von Pulvermischungen oder kompaktierten Vormischungen ist insbesondere zum Einbringen der oben genannten Additive geeignet. Hierbei können wahlweise alle vorgenannten Komponenten vorgemischt werden. Alternativ sind aber auch Vormischungen und Masterbatche von Farbmitteln sowie beliebige andere Kombinationen möglich. In allen Fällen werden für eine bessere Dosierbarkeit bei der Herstellung der thermoplastischen Polymer-Zusammensetzungen die vorgenannten Komponenten-Vormischungen bevorzugt mit pulverförmiger Polymerkomponente, aromatischem Polycarbonat oder PMMA, je nachdem, was die Hauptkomponente der thermoplastischen Zusammensetzung ist, so aufgefüllt, dass gut handhabbare Gesamtvolumina entstehen.

In einer besonderen Ausführungsform können die oben genannten Komponenten zu einem Masterbatch vermischt werden, wobei die Vermischung bevorzugt in der Schmelze unter Einwirkung von Scherkräften (zum Beispiel in einem Kneter oder Zweischneckenextruder) stattfindet. Dieses Verfahren bietet den Vorteil, dass die Komponenten besser in der Polymermatrix verteilt werden. Zur Herstellung des Masterbatches wird als Polymermatrix bevorzugt der thermoplastische Kunststoff gewählt, der auch die Hauptkomponente der letztlichen Polymer-Gesamtzusammensetzung darstellt.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden.

Der Mehrschichtkörper umfasst neben der Substratschicht noch eine oder mehrere Decklackschichten c. Diese erfüllen im erfindungsgemäßen Sinne bevorzugt die Funktion von Kratzfestschichten und/oder Witterungsschutzschichten. Die Decklackschichten sind entweder einseitig oder beidseitig aufgebracht. Ggf. zusammen mit der Primerschicht bedecken sie einen Teil der Oberfläche der Substratschicht oder aber die ganze Substratschicht. Vorzugsweise weist mindestens der Teil der Oberfläche der Substratschicht eine entsprechende Beschichtung auf, der die bei gewünschter Anwendung nach Außen sichtbare Oberfläche betrifft.

Die Decklackschicht c besteht bevorzugt aus einem Kratzfest-Lack (Hard-Coat, Decklack). Dieser kann beispielsweise ein Epoxy-, Acryl-, einschließlich der Urethanacrylat-, Polysiloxan-, kolloidales Kieselgel-Lack oder ein anorganisch/organisch Hybridystem basierter Lack sein. Dieser ist weiter bevorzugt ein Polysiloxanlack, noch weiter bevorzugt hergestellt nach dem Sol-Gel-Prozess. Die Decklackschicht c enthält besonders bevorzugt außerdem mindestens einen UV-Absorber, z.B. abgeleitet von Benzophenonen, Triazolen oder Triazinen. Die Decklackschicht c weist bevorzugt eine hohe Abrieb- und Kratzfestbeständigkeit auf und erfüllt damit insbesondere die Funktion einer Kratzfestbeschichtung. Der Anteil des UV-Absorbers in der Decklackschicht beträgt bevorzugt 5 bis 15 Gew.-%, weiter bevorzugt 8 bis 12 Gew.-%, bezogen auf das Gesamtgewicht der Decklackschicht.

Für den Mehrschichtkörper sind mehrere Ausführungen möglich. Kommerziell erhältliche Systeme für die Decklackschicht c sind z.B. AS4000, SHC5020 und AS4700 von Momentive Performance Materials. Derartige Systeme sind z.B. in US 5,041,313 A, DE 3,1213,85 A1, US 5,391,795 A und WO 2008/109072 A1 beschrieben. Die Synthese dieser Materialien erfolgt üblicherweise über Kondensation von Alkoxy- und/oder Alkylalkoxysilanen unter Säure- oder Basenkatalyse. Optional können Nanopartikel eingearbeitet werden. Bevorzugte Lösemittel sind Alkohole wie Butanol, Isopropanol, Methanol, Ethanol und deren Mischungen.

Es sind verschiedene Methoden bekannt, um eine Kratzfestbeschichtung auf Kunststoffartikeln herzustellen. Diese Systeme können beispielsweise über Tauchverfahren, Spincoating, Sprühverfahren oder eine Fließbeschichtung, bevorzugt über Tauch- oder Fließverfahren, aufgebracht werden. Die Aushärtung kann thermisch oder mittels UV-Bestrahlung erfolgen. Die Kratzfestbeschichtung kann z.B. direkt oder nach Vorbereitung der Substratoberfläche mit einer Grundierung (Primerschicht b) aufgetragen werden. Die Primerschicht enthält alternativ oder zusätzlich zur Decklackschicht besonders bevorzugt außerdem mindestens einen UV-Absorber, z.B. abgeleitet von Benzophenonen, Triazolen oder Triazinen. Ferner kann eine Kratzfestbeschichtung über Plasma-gestützte Polymerisationsverfahren aufgebracht werden, z.B. über ein SiO₂-Plasma. Antibeschlags- oder Antireflex-Beschichtungen können ebenfalls über Plasmaverfahren hergestellt werden. Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen.

Die Schutzschicht als Teil des Mehrschichtkörpers, umfassend mindestens die Decklackschicht, kann somit ein Ein- oder Mehrschichtsystem und somit auch eine Kombination zweier oder mehrerer Schichten etc. sein. Insbesondere kann die Schutzschicht aus den Schichten Decklackschicht c und Primer-Schicht b bestehen, wobei die Primerschicht b zwischen Decklackschicht c und Substratschicht a angeordnet ist.

In einer bevorzugten Ausführungsform, die eine besonders gute Bewitterungsstabilität bewirkt, umfasst die Schutzschicht eine
A) Kratzfestbeschichtung (Decklackschicht c) auf Polysiloxanbasis, enthaltend
   i. mindestens einen UV-Absorber aus der Gruppe der Benzophenone, Resorcine, 2-(2-Hydroxyphenyl-)Bentriazole, Hydroxyphenyl-s-Triazine, 2-Cyanacrylate, Oxalanilide
      und/oder einen UV-Inhibitor aus der Gruppe der sterisch gehinderten Amine (HALS), insbesondere basierend auf 2,2,6,6-Tetramethylpiperidin oder dessen Derivaten;
   ii. mindestens eine Kombination von einem organo-modifizierten Silan mit einem Kiesel-Sol, wobei das organo-modifizierte Silan vorzugsweise ein Methyltrialkoxy- oder Dimethyldialkoxysilan ist;
und optional, in einer weiter bevorzugten Ausführungsform, zusätzlich eine auf der Substratschicht angeordnete, als Haftvermittler zwischen der Kratzfestbeschichtung auf Polysiloxanbasis und der Substratschicht wirkende Primerschicht (Schicht b), enthaltend
mindestens einen UV-Absorber aus der Gruppe der Benzophenone, der Resorcine, 2-(2-Hydroxyphenyl-)Bentriazole, Hydroxyphenyl-s-Triazine, 2-Cyanacrylate, Oxalanilide und/oder sterisch gehinderten Amine (HALS), insbesondere basierend auf 2,2,6,6-Tetramethylpiperidin sowie dessen Derivaten,
wobei
die Dicke der Primerschicht 0,3 µm bis 8 µm, bevorzugt 1,1 µm bis 4,0 µm, beträgt.

Unter "Derivaten" werden erfindungsgemäß an dieser und anderer Stelle solche Verbindungen verstanden, deren Molekülstruktur an der Stelle eines H-Atoms oder einer funktionellen Gruppe ein anderes Atom oder eine andere Atomgruppe besitzt bzw. bei denen ein oder mehrere Atome/Atomgruppen entfernt wurden. Die Stammverbindung ist somit noch weiterhin erkennbar.

Sofern das thermoplastische Polymer, auf dem die für die Substratschicht verwendete Zusammensetzung basiert, ein aromatisches Polycarbonat ist, wird bevorzugt ein UV-Absorber enthaltender Primer für die Primerschicht b eingesetzt, um die Haftung des Kratzfestlackes auf der Substratschicht zu verbessern. Der Primer enthält bevorzugt weitere Stabilisatoren wie z.B. HALS-Systeme (Stabilisatoren auf Basis sterisch gehinderter Amine), Haftvermittler und/oder Fließhilfsmittel. Das jeweilige Harz, welches das Basismaterial der Primerschicht b bildet, kann aus einer Vielzahl von Materialien ausgewählt werden und ist beispielsweise in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melamin-basierte, Epoxy-und Alkyd-Systeme oder Mischungen dieser Systeme eingesetzt werden. Das Harz wird meistens in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 50 °C und 140 °C eingesetzt - häufig, nachdem ein Großteil des Lösemittels kurzzeitig bei Raumtemperatur entfernt wurde. Kommerziell erhältliche Primer-Systeme sind z.B. SHP470, SHP470-FT2050 und SHP401 der Firma Momentive Performance Materials. Derartige Beschichtungen sind z.B. in US 6,350,512 B1, US 5,869,185 A, EP 1308084 A1 und WO 2006/108520 A1 beschrieben.

Die Polysiloxanschicht enthält bevorzugt siliciumorganische Verbindungen der Formel RₙSiX₄₋ₙ, und/oder partielle Kondensate derselben,
wobei die Reste R gleich oder verschieden sind und für einen linearen oder verzweigten, gesättigten oder ein- oder mehrfach ungesättigten oder aromatischen Kohlenwasserstoffrest stehen,
die Reste X gleich oder verschieden sind und für hydrolysierbare Gruppen oder Hydroxylgruppen stehen, bevorzugt für Halogen, insbesondere Chlor oder Brom, Alkoxygruppen, Alkylcarbonylgruppen oder Acyloxygruppen stehen und
n 0, 1, 2 oder 3, bevorzugt 1 oder 2, ganz besonders bevorzugt 1, ist.

R steht bevorzugt für gesättigte, verzweigte oder unverzweigte Alkylreste mit 1 bis 20 Kohlenstoffatomen und/oder für ein- oder mehrfach ungesättigte verzweigte oder unverzweigte Alkenylreste mit 2 bis 20 Kohlenstoffatomen oder aromatische Gruppen mit 6 bis 12 Kohlenstoffatomen. Weiter bevorzugt weisen die Alkyl- bzw. Alkenylreste bis zu 12, noch weiter bevorzugt bis zu 8 Kohlenstoffatome auf. Besonders bevorzugt sind alle Reste Methyl- und/oder Phenylreste.

Besonders bevorzugt steht X für eine Alkoxygruppe, ganz besonders bevorzugt für eine C₁- bis C₄-Alkoxygruppe, beispielsweise für eine Methoxy- oder eine Ethoxygruppe.

Die Silicium-Verbindungen RₙSiX₄₋ₙ sind über die Reste X hydrolysierbar und kondensierbar. Über diese hydrolytisch kondensierbaren Gruppen wird ein anorganisches Netzwerk mit Si-O-Si-Einheiten aufgebaut. Die Reste R sind unter den üblichen Kondensationsbedingungen im Gegensatz zu den Resten X gegenüber einer Hydrolyse stabil.

Bei Verwendung der vorgenannten Siloxan-basierten Decklacksysteme sind Trockenschichtdicken von 3 µm - 20 µm bevorzugt, weiter bevorzugt 5 µm - 15 µm, besonders bevorzugt 6 µm - 12 µm. Unter "Trockenschichtdicke" wird die Schichtdicke der Decklackschicht c nach Applikation, Verdampfen des Lösemittels und anschließender thermischer oder UV-Härtung gemeint. Die Schichtdicke kann beispielsweise mittels Weißlichtinterferometrie (z.B. mittels eines Weißlichtinterferometers der Firma Eta Optic; ETA-SST) bestimmt werden, was bevorzugt ist. Ferner kann über Querschnittspräparation und mikroskopische Erfassung (über Lichtmikroskopie oder Rasterelektronenmikroskopie) der Schichten über Materialkontrast die Dicke erfasst werden.

Wie zuvor beschrieben, können anstelle von Primer/Kratzfestbeschichtungs-Kombinationen auch Einkomponenten-Hybrid-Systeme als Decklackschicht c, entweder thermisch- oder UV-härtend, für die Mehrschichtkörper eingesetzt werden.

Diese sind z.B. in EP 0570165 A2, WO 2008/071363 A2 oder DE 2804283 A beschrieben. Kommerziell erhältlich Hybrid-Systeme sind z.B. unter den Namen PHC 587, PHC 587C als thermisch härtende Systeme bekannt.

Bevorzugte erfindungsgemäße Mehrschichtkörper sind solche, umfassend
a) eine Substratschicht mit einer Lichttransmission im Bereich von 380 bis 780 nm von weniger als 0,5 %, bestimmt bei einer Schichtdicke von 4 mm nach DIN ISO 13468-2:2006 (D65, 10°),
   bestehend aus einer thermoplastischen Zusammensetzung enthaltend
   mindestens 85 Gew.-% Polymethylmethacrylat oder aromatisches Polycarbonat, bevorzugt aromatisches Polycarbonat,
      und
      i) 0,05 bis 2,5 Gew.-% Weißpigment Titandioxid,
         das einen Rutil-Anteil von > 99 Gew.-% aufweist und eine mittlere Partikelgröße D₅₀, bestimmt mittels Rasterelektronenmikroskopie, von 0,4 µm bis 2,5 µm aufweist und
         wobei das Titandioxid eine Beschichtung aufweist, welche Siliciumdioxid, Aluminiumoxid und ggf. Titandioxid enthält, und wobei das Verhältnis der Summe von Aluminium- und Siliciumanteil in Atom-% in der Beschichtung zum Titananteil in Atom-% in der Beschichtung größer als 5:1 ist,
      ii) mindestens zwei Farbmittel, welche entweder ein organisches Farbmittel und ein anorganisches Farbmittel oder zwei organische Farbmittel sind, wobei das anorganische Farbmittel kein Titandioxid ist und kein Ruß ist,
   b) ggf. eine Primerschicht und
   c) eine Decklackschicht,
   wobei die Primerschicht und/oder die Decklackschicht mindestens einen UV-Absorber enthält.

Weiter bevorzugte erfindungsgemäße Mehrschichtkörper sind solche, umfassend
a) eine Substratschicht mit einer Lichttransmission im Bereich von 380 bis 780 nm von weniger als 0,5 %, bevorzugt weniger als 0,10 %, bestimmt bei einer Schichtdicke von 4 mm nach DIN ISO 13468-2:2006 (D65, 10°),
   bestehend aus einer thermoplastischen Zusammensetzung enthaltend
   mindestens 95 Gew.-% Polymethylmethacrylat oder aromatisches Polycarbonat, bevorzugt aromatisches Polycarbonat,
      und
      i) 0,1 bis 2,0 Gew.-% Weißpigment Titandioxid, das einen Rutil-Anteil (bezogen auf die Kristallstruktur des Titandioxids) von > 99 Gew.-% aufweist und eine mittlere Partikelgröße D₅₀, bestimmt mittels Rasterelektronenmikroskopie, von 0,4 µm bis 2,5 µm aufweist und
         wobei das Titandioxid eine Beschichtung aufweist, welche Siliciumdioxid, Aluminiumoxid und ggf. Titandioxid enthält, und wobei das Verhältnis der Summe von Aluminium- und Siliciumanteil in Atom-% in der Beschichtung zum Titananteil in Atom-% in der Beschichtung größer als 10:1 ist,
      ii) mindestens zwei Farbmittel, welche entweder ein organisches Farbmittel und ein anorganisches Farbmittel oder zwei organische Farbmittel sind, wobei das anorganische Farbmittel kein Titandioxid ist und kein Ruß ist,
   b) ggf. eine Primerschicht und
   c) eine Decklackschicht,
   wobei die Primerschicht und/oder die Decklackschicht mindestens einen UV-Absorber enthält.

Noch weiter bevorzugte Mehrschichtkörper sind solche, umfassend
a) eine Substratschicht mit einer Lichttransmission im Bereich von 380 bis 780 nm von weniger als 0,10 %, bestimmt bei einer Schichtdicke von 4 mm nach DIN ISO 13468-2:2006 (D65, 10°),
   bestehend aus einer thermoplastischen Zusammensetzung enthaltend
   mindestens 95 Gew.-% Polymethylmethacrylat oder aromatisches Polycarbonat, bevorzugt aromatisches Polycarbonat,
      und
      i) 0,1 bis 1,5 Gew.-% Weißpigment Titandioxid,
         das einen Rutil-Anteil von > 99 Gew.-% aufweist und eine mittlere Partikelgröße D₅₀, bestimmt mittels Rasterelektronenmikroskopie, von 0,65 µm bis 1,15 µm aufweist und
         wobei das Titandioxid eine Beschichtung aufweist, welche Siliciumdioxid, Aluminiumoxid und Titandioxid enthält, und wobei das Verhältnis der Summe von Aluminium- und Siliciumanteil in Atom-% in der Beschichtung zum Titananteil in Atom-% in der Beschichtung des Titandioxids mindestens 18:1 ist,
      ii) mindestens zwei Farbmittel, welche entweder ein organisches Farbmittel und ein anorganisches Farbmittel oder zwei organische Farbmittel sind, wobei das anorganische Farbmittel kein Titandioxid ist und kein Ruß ist, wobei als organisches Farbmittel mindestens eines aus der Gruppe der zuvor dargestellten Farbmittel (1), (2a), (2b), (2c), (3), (4a), (4b), (5), (6). (7), (8), (9), (10), (11), (12a), (12b), (13), (14), (15), (16), (17), (18), Amaplast Gelb GHS mit der CAS-Nummer 13676-91-01, eines der Heliogen Blau-Reihe oder der Heliogen Grün-Reihe enthalten ist,
   b) ggf. eine Primerschicht und
   c) eine Decklackschicht,
   wobei die Primerschicht und/oder die Decklackschicht mindestens einen UV-Absorber enthält.

Besonders bevorzugt umfasst die Zusammensetzung darüber hinaus außer einem oder mehreren weiteren Additiven, ausgewählt aus der Gruppe, bestehend aus UV-Absorbern, Entformungsmitteln, Thermostabilisatoren, Antistatika, Blendpartnern und Fließverbesserern, keine weiteren Komponenten, ganz besonders bevorzugt umfasst sie mindestens einen UV-Absorber. Als Farbmittel sind ganz besonders bevorzugt in der Substratschicht lediglich solche der Formeln (1) bis (18), Amaplast Gelb GHS, der Heliogen Blau-Typen und der Heliogen Grün-Typen enthalten.

Die Dicke der Substratschicht beträgt, insbesondere bei den vorgenannten Ausführungsformen, bevorzugt 0,2 bis 10,0 mm, weiter bevorzugt 0,5 bis 8,0 mm, noch weiter bevorzugt 1,0 bis 6,0 mm.

Besonders bevorzugt ist bei oben genannten Ausführungsformen die Decklackschicht Polysiloxanbasiert mit einer Trockenschichtdicke von 3 bis 20 µm.

Die erfindungsgemäßen Mehrschichtkörper aus Substrat- und Decklackschicht und ggf. weiteren Schichten können durch (Co)extrusion, Direct Skinning, Direct Coating, Insert Moulding, Folienhinterspritzen, oder sonstige dem Fachmann bekannte geeignete Verfahren hergestellt werden.

Spritzgießverfahren sind dem Fachmann bekannt und beispielsweise im "Handbuch Spritzgießen", Friedrich Johannnaber/Walter Michaeli, München; Wien: Hanser, 2001, ISBN 3-446-15632-1 oder in "Anleitung zum Bau von Spritzgießwerkzeugen", Menges/Michaeli/Mohren, München; Wien: Hanser, 1999, ISBN 3-446-21258-2 beschrieben.

Extrusionsverfahren sind dem Fachmann bekannt und beispielsweise für die Coextrusion unter anderem beschrieben in EP 0 110 221 A2, EP 0 110 238 A2 und EP 0 716 919 A2. Für Details des Adapter- und Düsenverfahrens siehe Johannaber/Ast: "Kunststoff-Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990.

Neben dem erfindungsgemäßen Mehrschichtkörper betrifft die Erfindung auch entsprechende Erzeugnisse, bestehend aus den erfindungsgemäßen Mehrschichtkörper oder umfassend die erfindungsgemäßen Mehrschichtkörper.

Solche erfindungsgemäß bevorzugten Erzeugnisse, Formkörper oder geformten Gegenstände aus erfindungsgemäßen Mehrschichtkörpern bzw. umfassend erfindungsgemäße Mehrschichtkörper sind z.B. bei Bauanwendungen eingesetzte Erzeugnisse, insbesondere für den Außeneinsatz, wie Regenrohre und Fensterrahmen, ferner solche in Automobilanwendungen wie Dachmodule, Abdeckungen im Außen- und Innenbereich (z.B. Blenden), Spoiler und Spiegelgehäuse sowie sonstige Karosseriebestandteile und generell Fahrzeugaußenteile, d.h. auch Außenteile von z.B. Schienenfahrzeugen und Luftfahrzeugen. Ferner können die erfindungsgemäßen Mehrschichtkörper für Gehäuse oder Gehäuseelemente im Außenbereich z.B. Elektroschaltkästen, Antennen oder Antennenelemente, etwa für die 4G- oder 5G-Technologie, für Gehäuse oder Gehäuseelemente von Mobilfunk-Basisstationen, etwa für 4G oder 5G-Technologie, Rohre etc., für Spielzeug und Spielgeräte für den Außenbereich eingesetzt werden, ebenso für Lampenfassungen für den Innenraumbereich von Fahrzeugen und Gebäuden, Lampenabdeckungen für den Außenbereich wie z.B. Abdeckungen von Straßenlaternen. Die erfindungsgemäßen Zusammensetzungen können für Massivplatten, aber auch für Doppelstegplatten oder Multistegplatten verwendet werden.

### Beispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

### Bestimmungsmethoden:

Die Bestimmungsmethoden für die im Folgenden genannten Eigenschaften gelten auch an anderer Stelle der Beschreibung, sofern dort nichts Anderes angegeben wurde. Umgekehrt gelten die im sonstigen Beispielteil angegebenen Anmerkungen zu den Bestimmungsmethoden, sofern nachfolgend nichts Anderweitiges genannt ist.

Die Bestimmung der **Schmelze-Volumenfließrate** (MVR) erfolgte nach ISO 1133:2012-03 (bei einer Prüftemperatur von 300 °C, Masse 1,2 kg) mit dem Gerät Zwick 4106 der Firma Zwick Roell.

Die Bestimmung der **Farbe in Transmission** erfolgte mit einem Lambda 900 Spektralphotometer der Firma Perkin Elmer mit Photometerkugel in Anlehnung an ASTM E1348-15 mit den in der ASTM E308-08 beschriebenen Gewichtungsfaktoren und Formeln.

Die Transmissionsmessungen (**Transmission im VIS-Bereich**, 380 bis 780 nm) wurden an einem Lambda 900 Spektralphotometer der Firma Perkin Elmer mit Photometerkugel nach ISO 13468-2: 2006 durchgeführt (d.h. Bestimmung der Gesamttransmission durch Messung der diffusen Transmission und direkten Transmission).

**Farbveränderung**: Die Proben wurden in Reflexion nach ASTM E 1331-04 gemessen. Daraus werden die Farbwerte L^{∗},a^{∗}, b^{∗} im Farbraum CIELAB 1976 nach ASTM E 308-08 für die Lichtart D65 und den 10°-Beobachter berechnet.

Der **Yellowness-Index** (Y.I.) wurde gemäß ASTM E 313-15 (Beobachter: 10° / Lichtart: D65) an Musterplatten mit einer Schichtdicke von 4 mm bestimmt.

### Glanzmessung

Zur Beurteilung der Oberflächeneigenschaften wurden Glanzmessungen durchgeführt. Dafür wurden die Proben in ein Glanzmessgerät eingelegt und unter 60° der Glanz gemessen (ASTM D 2457-08).

Die künstliche **Bewitterung** mit Xenon-Belichtung wurde nach der Norm ASTM G 155-13 in einem Xenon-Weatherometer CI 5000 der Firma Atlas an Farbmusterplatten (s. Herstellung der Prüfkörper) durchgeführt. Als UV-Filter wurden zwei Borosilikatglas-Filter verwendet. Die Einstrahlungsstärke betrug 0,75 W/m²/nm bei 340 nm. Die Schwarzstandardtemperatur betrug 80°C, die Probenraumtemperatur 40°C. Die Proben wurden alle 120 min für 18 min beregnet, wobei die Belichtung auch während der Beregnungsphase eingeschaltet blieb. Das vorgenannte Bewitterungsverfahren wird im Folgenden "Xe Wom 0,75 W" genannt.

Die Bestimmung des **visuellen Farbeindrucks** erfolgt mit bloßem Auge anhand von Farbmusterplatten (s. Herstellung der Prüfkörper). Hierzu wurden die Farbmusterplatten unter Tageslicht vor einem weißen Hintergrund betrachtet und entsprechend beurteilt.

### Materialien zur Herstellung der Probenkörper:

### Titandioxid für Vergleichsbeispiele:

**Kronos 2230** der Firma Kronos Worldwide Inc. Dieser Titandioxidtyp zeichnet sich durch folgende Charakteristika aus: Titandioxid vom Rutiltyp in einer Menge von über 93,0 Gew.-% in Kronos 2230; mittlerer Partikeldurchmesser (D₅₀, bestimmt mittels Rasterelektronenmikroskopie (STEM)) ca. 0,2 µm. Die äußere anorganische Schicht mit einer Dicke von ca. 10 nm enthält eine homogene Mischung von Titandioxid und Silicium-/Aluminiumoxiden (bestimmt mittels Röntgenphotonenelektronenspektroskopie; XPS). Das Verhältnis von Silicium + Aluminium zu Titan, jeweils in Atom-%, beträgt ca. 1:1.

### Titandioxid für erfindungsgemäße Beispiele:

**Altiris 550** der Firma Huntsman. Dieser Titandioxidtyp zeichnet sich durch folgende Charakteristika aus: Titandioxid vom Rutiltyp; mittlerer Partikeldurchmesser (D₅₀, bestimmt mittels Rasterelektronenmikroskopie (STEM)) ca. 0,7 µm, bestimmt mittels Rastertransmissionselektronenmikroskopie (STEM). Die äußere Schicht mit einer Dicke von ca. 10 bis 15 nm umfasst eine Mischung von Titandioxid und Silicium-/Aluminiumoxiden mit einem erhöhtem Anteil an Silicium- und Aluminiumoxiden (bestimmt mittels Röntgenphotonenelektronenspektroskopie; XPS). Das Verhältnis der Summe von Silicium + Aluminium zu Titan, jeweils in Atom-%, in der Beschichtung beträgt ca. 20:1. Dieses Verhältnis ergibt sich auch bei einem Detektionswinkel von 45°.

**Altiris 800** der Firma Huntsman. Dieser Titandioxidtyp zeichnet sich durch folgende Charakteristika aus: Titandioxid vom Rutiltyp; mittlerer Partikeldurchmesser (D₅₀, bestimmt mittels Rasterelektronenmikroskopie (STEM)) ca. 1,1 µm, bestimmt mittels Rastertransmissionselektronenmikroskopie (STEM). Die äußere Schicht mit einer Dicke von ca. 10 - 15 nm umfasst eine Mischung von Titandioxid und Silicium-/Aluminiumoxiden mit einem erhöhtem Anteil an Silicium- und Aluminiumoxiden (bestimmt mittels Röntgenphotonenelektronenspektroskopie; XPS). Das Verhältnis der Summe von Silicium + Aluminium zu Titan, jeweils in Atom-%, in der Beschichtung beträgt ca. 20:1. Dieses Verhältnis ergibt sich auch bei einem Detektionswinkel von 45°.

### PC1:

Zusammensetzung, bestehend aus Polycarbonat der Firma Covestro Deutschland AG mit einer MVR von ca. 12 cm³/(10 min), gemessen bei 300 °C und 1,2 kg Belastung (gemäß ISO 1133-1:2012-03), basierend auf Bisphenol A und terminiert mit Phenol, sowie 0,20 Gew.-% Tinuvin 329 (UV-Absorber) und 0,30 Gew.-% Pentaerythrittetrastearat (Entformungsmittel).

### PC2:

Polycarbonat der Firma Covestro Deutschland AG mit einer MVR von ca. 12 cm³/(10 min), gemessen bei 300 °C und 1,2 kg Belastung (gemäß ISO 1133-1:2012-03), basierend auf Bisphenol A und terminiert mit Phenol. Das Polycarbonat enthält keine weiteren Additive.

### PC3:

Polycarbonat der Firma Covestro Deutschland AG mit einer MVR von ca. 6 cm³/(10 min), gemessen bei 300 °C und 1,2 kg Belastung (gemäß ISO 1133-1:2012-03), basierend auf Bisphenol A und terminiert mit Phenol. Das Polycarbonat enthält keine weiteren Additive.

### PC4:

Polycarbonat der Firma Covestro Deutschland AG mit einer MVR von ca. 12 cm³/(10 min), gemessen bei 300 °C und 1,2 kg Belastung (gemäß ISO 1133-1:2012-03), basierend auf Bisphenol A und terminiert mit Phenol, enthaltend 0,30 Gew.-% Pentaerythrittetrastearat als Entformungsmittel.

### Farbmittel nach Struktur 12a und 12b mit n = 0 (keine Substituenten), 1:1-Gemisch:

5,62 g (0,025 mol) Benzol-1,2,4,5-tetracarbonsäuredianhydrid und 7,99 g (0,05 mol) 1,8-Diaminonaphthalin wurden in 75ml n-Ethylpyrrolidon bei Raumtemperatur vorlegt und langsam auf 150 °C erhitzt. Bei dieser Temperatur wurde für 5 Stunden gerührt. Nach Abkühlen wurden 125 ml Wasser zugegeben und der ausgefallene Niederschlag abfiltriert. Der Niederschlag wurde noch mehrmals in Wasser aufgeschlämmt und auf diese Art gewaschen. Der Niederschlag wurde im Hochvakuum bei 80°C getrocknet. Der getrocknete Niederschlag wurde mit einer Mischung aus 50 ml Eisessig und 25 ml Acetanhydrid versetzt. Das Gemisch wurde für 4 Stunden unter Rückfluss gekocht. Nach Abkühlen wurde das Reaktionsgemisch in 500 ml Wasser gegeben. Der Niederschlag wurde abfiltriert, mit Wasser gewaschen und im Hochvakuum bei 80 °C getrocknet. Es wurden 12,5 g lila-farbenes Pulver erhalten.

### Bayferrox 110 M:

Mikronisiertes, gelbstichiges Eisenoxid-Rotpigment mit der CAS-Nummer 001309-37-1 der Firma Lanxess Deutschland GmbH.

### Colortherm Red 130M:

Hitzestabiles, mikronisiertes Eisenoxid-Rotpigment mit der CAS-Nummer 001309-37-1 der Firma Lanxess Deutschland GmbH.

### Elftex 570 pearls:

Ruß für die Einfärbung von Kunststoffen der Firma Cabot Corp.

### Gelb 3G:

MACROLEX^{®} Gelb 3G, Pyrazolonfarbstoff Solvent Yellow 93 der Firma Lanxess Deutschland GmbH.

### Heliogen Blue K7104 LW:

Heliogen^{®} Blue K 7104 LW, Kupfer-Phthalocyanin-basiertes Pigment, Pigment Blue 15:4 mit der CAS-Nummer 147-14-8 der Firma BASF SE, Ludwigshafen, Deutschland.

### Heliogen Green K8730:

Chloriertes Kupfer-Phthalocyanin mit der CAS-Nummer 132-53-5 der Firma BASF SE, Ludwigshafen, Deutschland.

### Heucodur Blue 2R:

Cobalt-Aluminium-Blau-Spinell mit der CAS-Nummer 1345-16-0 der Firma Heubach GmbH, Deutschland.

### Lamp Black 101:

Ruß für die Einfärbung von Kunststoffen der Firma The Cary Company 1195 W. Fullerton Ave, Addison IL 60101.

### Macrolex Red EG:

Perinon-Farbstoff Solvent Red 135 der Firma Lanxess Deutschland GmbH.

### Macrolex Yellow 6G:

Methin-Farbstoff Solvent Yellow 179 der Firma Lanxess Deutschland GmbH.

### Macrolex^{®} Yellow G. Gran.:

Quinophthalon-Farbstoff Solvent Yellow 114; Disperse Yellow 54 der Firma Lanxess Deutschland GmbH.

### Oracet Yellow 180 (Oracet Yellow GHS):

Anthrachinon-Farbstoff, Solvent Yellow 163 der Firma BASF SE, Ludwigshafen, Deutschland.

### Paliogen Blau 6385:

Paliogen Blau L 6385 (Pigment Blue 60) mit der CAS-Nummer 81-77-6 der BASF SE, 67065 Ludwigshafen, Deutschland. Dieses Farbmittel weist ein Schüttvolumen von 7 1/kg, einen pH-Wert von 6 - 9 und eine spezifische Oberfläche von 40 m²/g auf.

### Sicotan Yellow K1010:

Ni/Sb/Ti-Oxid mit der CAS-Nummer 8007-18-9 der Firma BASF SE, Ludwigshafen, Deutschland.

### Sicotan Yellow K2107:

Cr/Sb/Ti-Oxid mit der CAS-Nummer 68186-90-3 der Firma BASF SE, Ludwigshafen, Deutschland.

### Ultramarine Blue Nubix F-70:

Pigment Blue 29 mit der CAS-Nummer 057455-37-5 der Firma Nubiola (Ferro Corp.; Mayfield Heights, Ohio, USA).

### Triphenylphosphin:

Triphenylphosphin (TPP), Sigma-Aldrich, 82018 Taufkirchen, Deutschland.

### Black Pearls 800:

Black Pearls^{®} 800, CAS-Nummer 1333-86-4; Partikelgröße ca. 17 nm) der Firma Cabot Corp.

### Richnox B900:

Mischung aus Richfos 168 (80 Gew.-%) und Richox 1076 (20 Gew.-%), wobei Richfos 168 Tris-(2,4-di-tert- butylphenyl)phosphit mit der CAS-Nummer 31570-04-4 und Richnox 1076 Octadecyl-3-(3,5-di-tert-butyl-4-hydroxyphenyl)propionate ist; Rich Yu Chemical B.V. The Netherlands.

### Tinuvin 326:

2-(5-Chloro-2H-benzotriazol-2-yl)-6-(1,1-dimethylethyl)-4-methyl-phenol mit der CAS-Nummer 3896-11-5 der Firma BASF SE, Ludwigshafen, Deutschland.

### Tinuvin 329:

Tinuvin^{®} 329; 2-(2-Hydroxy-5-tert-octylphenyl)-benzotriazol mit der CAS-Nummer 3147-75-9 von der BASF SE, Ludwigshafen, Deutschland.

### TOF:

Triisooctylphosphat (TOF; Tris-2-ethyl-hexyl-phosphat) mit der CAS-Nummer 78-42-2. Disflamoll TOF der Lanxess Deutschland GmbH.

### Herstellung der thermoplastischen Polymer-Zusammensetzungen durch Compoundierung:

Die Compoundierung der Additive erfolgte auf einem Zweiwellenextruder der Firma KraussMaffei Berstorff, TYP ZE25, bei einer Gehäusetemperatur von 260°C bzw. einer Massetemperatur von 270°C und einer Drehzahl von 100 Upm bei einem Durchsatz von 10 kg/h mit den in den Beispielen angegebenen Mengen an Komponenten. Hierbei wurde zunächst zur besseren Vermischung eine Pulvermischung (10 Gew.-% Pulvermischung, bezogen auf die Gesamtzusammensetzung), enthaltend die Additive, angefertigt. Diese Pulvermischung wurde bei der Compoundierung zu dem restlichen Polycarbonat zudosiert.

### Herstellung der Prüfkörper:

Das Granulat wurde bei 120 °C für 3 Stunden im Vakuum getrocknet und anschließend auf einer Spritzgussmaschine vom Typ Arburg 370 mit einer 25-Spritzeinheit bei einer Massetemperatur von 300 °C und einer Werkzeugtemperatur von 90 °C zu Farbmusterplatten mit den Abmessungen 60 mm x 40 mm x Z mm) verarbeitet; Z ist dabei 3,2 mm, 4,0 mm bzw. 5,0 mm.

### Lackierung der Prüfkörper ("UV-Lacksystem"):

Als Primer wurde das Produkt SHP470FT (Momentive Performance Materials Inc. Wilton, CT USA) verwendet. Als Schutzlack wurde das Produkt AS 4700 (Momentive Performance Materials Inc. Wilton, CT USA) verwendet.

Die Beschichtung erfolgte in einem klimakontrollierten Beschichtungsraum unter den jeweiligen Vorgaben des Lackherstellers bei 23 bis 25°C und 40 bis 48% relativer Feuchte.

Die Prüfkörper wurden mit sogenannten Iso-Tüchern (LymSat^{®} der Firma LymTech Scientific; gesättigt mit 70% Isopropanol und 30% deionisiertem Wasser) gereinigt, mit Isopropanol abgespült, 30 min an Luft getrocknet und mit ionisierter Luft abgeblasen.

Die Beschichtung der Probenkörper erfolgte per Hand nach dem Flutverfahren. Hierbei wurde die Primerlösung ausgehend von der oberen Kante des Kleinteiles in Längsrichtung über die Platte gegossen, während gleichzeitig der Ansatzpunkt des Primers auf der Platte von links nach rechts über die Plattenbreite geführt wurde. Die geprimerte Platte wurde senkrecht an einer Klammer hängend nach den jeweiligen Herstellervorgaben bis zur Staubtrockene abgelüftet und im Umluftofen gehärtet (30 Minuten bei Raumtemperatur abgelüftet und 30 Minuten bei 125 °C gehärtet). Nach dem Abkühlen auf Raumtemperatur erfolgte die Beschichtung der geprimerten Fläche mit AS 4700. Nach der Ablüftung bis zur Staubtrockene erfolgte die Härtung 60 min bei 130°C im Umluftofen.

Die Primerschichtdicke und die Dicke des Topcoats können die Bewitterungseigenschaften beeinflussen.

Die Primerschichtdicke für die nachfolgenden Beispiele lag im Bereich 1,2 - 4,0 µm und die Dicke des Topcoats zwischen 4,0 und 8,0 µm.

**Tabelle 1: Vergleichsbeispiel 1-1. Unbeschichteter Probenkörper.**

| **Einsatzstoff** | **Gew.-%** |
|---|---|
| PC1, enthaltend UV-Absorber, Entformungsmittel | 99,440 |
| Macrolex Yellow G Gran. | 0,005 |
| Bayferrox 110 M | 0,100 |
| Macrolex Red EG | 0,300 |
| Farbmittel 12a/b [Specialty] | 0,005 |
| Kronos 2230 | 0,150 |

**Tabelle 2: Vergleichsbeispiel 1-2. Unbeschichteter Probenkörper.**

| **Einsatzstoff** | **Gew.-%** |
|---|---|
| PC2 | 95,00 |
| PC3 | 4,29 |
| Macrolex Yellow G | 0,005 |
| Bayferrox 110 M | 0,100 |
| Macrolex Red EG | 0,300 |
| Farbmittel 12a/b | 0,005 |
| Altiris 550 | 0,300 |

**Tabelle 3: Vergleichsbeispiel 1-3. Unbeschichteter Probenkörper.**

| **Einsatzstoff** | **Gew.-%** |
|---|---|
| PC2 | 95,00 |
| PC3 | 4,29 |
| Macrolex Yellow G | 0,005 |
| Bayferrox 110 M | 0,100 |
| Macrolex Red EG | 0,300 |
| Farbmittel 12a/b | 0,005 |
| Altiris 800 | 0,300 |

**Tabelle 4: Vergleichsbeispiel 1-4. Unbeschichteter Probenkörper.**

| **Einsatzstoff** | **Gew.-%** |
|---|---|
| PC2 | 95,00 |
| PC3 | 4,29 |
| Macrolex Yellow G | 0,005 |
| Bayferrox 110 M | 0,100 |
| Macrolex Red EG | 0,300 |
| Farbmittel 12a/b | 0,005 |
| Titandioxid Kronos 2230 | 0,150 |
| Altiris 550 | 0,150 |

**Tabelle 5: Unbeschichteter Probenkörper 1-1 bis 1-4 vor und nach Bewitterung.**

| **Bsp.** | **Y.I.** | **Glanz 60°** |
|---|---|---|
| 1-1 0h | 103,4 | 103 |
| 1-1 1100 h | 90,6 | 28 |
| 1-2 0 h | 106,1 | 102,3 |
| 1-2 1100 h | 100,2 | 8 |
| 1-3 0 h | 101,1 | 102 |
| 1-3 1100 h | 97,4 | 11 |
| 1-4 0 h | 109 | 102,4 |
| 1-4 1100 h | 97,5 | 5 |

Es zeigt sich, dass nach Bewitterung alle Proben, die unbeschichteten Probenkörper 1-1 bis 1-4, einen massiven Glanzverlust aufweisen. Die Unterschiede im Glanzverlust zwischen den Proben sind tendenziell gering. Von allen Proben zeigt Beispiel A mit Titandioxid vom Typ Kronos 2230 noch den größten Glanzwert nach Bewitterung. Die Farbe wird ebenfalls negativ beeinflusst, welches durch die Veränderung im Y.I. dokumentiert wird (gemessen in Reflexion). Auch Mischungen aus verschiedenen Titandioxidtypen (Beispiel 4) zeigen einen massiven Glanzverlust sowie eine Farbverschiebung. Visuell lassen sich die Proben 1-1 bis 1-4 kaum unterscheiden. Zwischen den Farben der Proben gibt es trotz unterschiedlicher Titandioxidtypen visuell nach Bewitterung keine signifikanten Unterschiede.

**Tabelle 6: Vergleichsbeispiel 2-1; Substratschicht mit UV-Lacksystem beschichtet. Roter Farbeindruck.**

| **Einsatzstoff** | **Gew.-%** |
|---|---|
| PC4 | 99,435 |
| Kronos 2230 | 0,100 |
| Sicotan Yellow K2107 | 0,030 |
| Heucodur Blue 2R | 0,022 |
| Macrolex Red EG | 0,350 |
| Bayferrox 110 M | 0,0630 |

**Tabelle 7: Vergleichsbeispiel 2-2; Substratschicht mit UV-Lacksystem beschichtet. Brauner Farbeindruck.**

| **Einsatzstoff** | **Gew.-%** |
|---|---|
| PC4 | 99,2055 |
| Oracet Yellow 180 (Oracet Yellow GHS) | 0,0145 |
| Sicotan Yellow K2107 | 0,2200 |
| Colortherm Red 130M | 0,2850 |
| Elftex 570 pearls [Specialty] | 0,1400 |
| Kronos 2230 | 0,1350 |

**Tabelle 8: Vergleichsbeispiel 2-3; Substratschicht mit UV-Lacksystem beschichtet. Grüner Farbeindruck.**

| **Einsatzstoff** | **Gew.-%** |
|---|---|
| PC4 | 98,9845 |
| Macrolex Yellow 6G [Specialty] | 0,0125 |
| Sicotan Yellow K2107 | 0,3500 |
| Heliogen Green K8730 | 0,3470 |
| Lamp Black 101 | 0,1060 |
| Kronos 2230 | 0,2000 |

**Tabelle 9: Vergleichsbeispiel 2-4; Substratschicht mit UV-Lacksystem beschichtet. Gelber Farbeindruck.**

| **Einsatzstoff** | **Gew.-%** |
|---|---|
| PC4 | 98,875 |
| Macrolex Yellow 6G [Specialty] | 0,124 |
| Sicotan Yellow K2107 | 0,021 |
| Kronos 2230 | 0,98 |

**Tabelle 10: Vergleichsbeispiel 2-5; Substratschicht mit UV-Lacksystem beschichtet. Blauer Farbeindruck.**

| **Einsatzstoff** | **Gew.-%** |
|---|---|
| PC4 | 99,26182 |
| Sicotan Yellow K1010 | 0,10000 |
| Ultramarine Blue Nubix F-70 | 0,23800 |
| Heliogen Blue K7104 LW | 0,16800 |
| Heliogen Green K8730 | 0,00148 |
| Lamp Black 101 | 0,00070 |
| Kronos 2230 | 0,13000 |
| Triphenylphosphin (TPP) | 0,10000 |

**Tabelle 11: Probenkörper 2-1 bis 2-5 vor und nach Bewitterung XeWom 0,75 W**

| | **L*** | **a*** | **b*** | **L*** | **a*** | **b*** | **Δ L*** | **Δ a*** | **Δ b*** |
|---|---|---|---|---|---|---|---|---|---|
| | **0 h** | **0 h** | **0 h** | **3000 h** | **3000 h** | **3000 h** | | | |
| **V. 2-1** | 34,21 | 36,85 | 17,33 | 35,97 | 34,59 | 14,62 | 1,76 | 2,26 | 2,71 |
| **V. 2-2** | 26,40 | 2,02 | 1,67 | 26,94 | 1,50 | 0,95 | 0,54 | 0,52 | 0,72 |
| **V. 2-3** | 30,54 | -12,44 | 2,45 | 31,44 | -12,17 | 1,01 | 0,90 | 0,27 | 1,44 |
| **V. 2-4** | 90,02 | -9,35 | 81,89 | 90,86 | -8,55 | 65,88 | 0,84 | 0,80 | 16,09 |
| **V. 2-5** | 34,73 | -5,48 | -29,34 | 36,07 | -6,74 | -28,74 | 1,34 | 1,26 | 0,6 |

| | | | | | | | | | |
|---|---|---|---|---|---|---|---|---|---|
| V.: hier und nachfolgend = Vergleichsbeispiel | | | | | | | | | |

Visueller Eindruck:
V. 2-1: Glanzverlust
V. 2-2: Glanzverlust
V. 2-3: Glanzverlust
V. 2-4: Glanzverlust
V. 2-5: Glanzverlust; Schlieren

Überraschenderweise zeigen Farbrezepturen für rote, grüne, blaue, gelbe und braune Farbtöne alle ein instabiles Bewitterungsverhalten, obwohl ein für Polycarbonat optimiertes Titandioxid-Pigment, Kronos 2230, verwendet wurde. Zudem war außerdem eine UV-Kratzfestbeschichtung auf den Probenkörper aufgebracht. Bei allen Musterplatten war nach Bewitterung aber visuell ein Verlust an Glanz bzw. Brillanz festzustellen. Trotz Beschichtung mit einem UV-haltigem Lacksystem kommt es zu diesem Verlust an Brillanz. Beispiel 2-2 zeigt bezüglich der Lab-Werte eine geringere Farbabweichung. Dies ist vermutlich auf einen geringen Gehalt an organischem Farbmittel zurückzuführen. Es ist davon auszugehen, dass anorganische Farbmittel eine deutlich höhere Farbstabilität aufweisen.

**Tabelle 12: Vergleichsbeispiele 3-1 bis 3-5. Substratschicht mit UV-Lacksystem beschichtet.**

| | **V. 3-1** | **V. 3-2** | **V. 3-3** | **V. 3-4** | **V. 3-5** |
|---|---|---|---|---|---|
| | **Yellow** | **Red** | **Green** | **Blue** | **Brown** |
| **Einsatzstoffe** | **Gew.-%** | **Gew.-%** | **Gew.-%** | **Gew.-%** | **Gew.-%** |
| Makrolon^{®} AG2677 | 98,3405 | 99,44 | 93,905 | 99,4035 | 99,288 |
| Kronos 2230 | 1,47 | 0,15 | 0,200 | 0,29 | 0,22 |
| Bayferrox 110M | | 0,100 | | | 0,29 |
| Rot EG | | 0,300 | | | |
| Macrolex Yellow 6G | 0,181 | | | | |
| Oracet Yellow 180 | 0,0085 | | | | |
| Macrolex Yellow G | | 0,005 | 0,005 | 0,001 | 0,005 |
| Farbmittel 12a/b | | 0,005 | | 0,0055 | |
| Sicotan Yellow K2107 | | | 0,43 | | |
| Heliogen Green K8730 | | | 0,35 | | |
| Lamp Black 101 | | | 0,11 | | |
| Heliogen Blau K7104 | | | | 0,25 | |
| TPP | | | | 0,05 | |
| Sicotan Yellow K2011 | | | | | 0,077 |
| Black Pearls 800 | | | | | 0,12 |

**Tabelle 13: Vergleichsbeispiele 3-1 bis 3-5 vor und nach Bewitterung.**

| | **L*** | **a*** | **b*** | **Glanz 60°** | **L*** | **a*** | **b*** | **Glanz 60°** |
|---|---|---|---|---|---|---|---|---|
| | **0 h** | | | | **2600 h** | | | |
| **V. 3-1** | 90,5 | -9,6 | 82,1 | 81,5 | 91,9 | -8,9 | 65,6 | 79,8 |
| **Yellow** | | | | | | | | |
| **V. 3-2** | 34,9 | 36,1 | 17 | 79 | 36,7 | 34,1 | 13,4 | 76,2 |
| **Red** | | | | | | | | |
| **V. 3-3** | 31,2 | -12,7 | 2,5 | 78 | 32,5 | -12 | 1,43 | 76,3 |
| **Green** | | | | | | | | |
| **V. 3-4** | 26,5 | 1,9 | 1,7 | 78 | 27,2 | 1,46 | 1,1 | 76,8 |
| **Brown** | | | | | | | | |

Visueller Eindruck:
V. 3-1 Yellow: deutlicher Glanzverlust
V. 3-2 Red: deutlicher Glanzverlust
V. 3-3 Green: deutlicher Glanzverlust
V. 3-4 Brown: mittlerer Glanzverlust

Weitere Zusammensetzungen für eine grüne, eine rote, eine gelbe und eine braune Farbeinstellung sind in den Vergleichsbeispielen 3-1 bis 3-4 aufgeführt. Wie bei den Vergleichsbeispielen 2-1 bis 2-5 sind die Zusammensetzungen gegenüber Bewitterung instabil.

**Tabelle 14: Vergleichsbeispiele 4-1 bis 4-5. Probenkörper mit UV-Absorber und Triisooctylphosphat in der Substratschicht. Substratschicht mit UV-Lacksystem beschichtet.**

| | **V. 4-1** | **V. 4-2** | **V. 4-3** | **V. 4-4** | **V. 4-5** |
|---|---|---|---|---|---|
| | **Yellow** | **Red** | **Green** | **Blue** | **Brown** |
| **Einsatzstoff** | **Gew.-%** | **Gew.-%** | **Gew.-%** | **Gew.-%** | **Gew.-%** |
| Makrolon^{®} AG2677 | 98,1305 | 99,23 | 98,795 | 99,1935 | 99,078 |
| Kronos 2230 | 1,47 | 0,15 | 0,200 | 0,29 | 0,22 |
| Bayferrox 110M | | 0,100 | | | 0,29 |
| Rot EG | | 0,300 | | | |
| Macrolex Yellow 6G | 0,181 | | | | |
| Oracet Yellow 180 | 0,0085 | | | | |
| Macrolex Yellow G | | 0,005 | 0,005 | 0,001 | 0,005 |
| Farbmittel 12a/b | | 0,005 | | 0,0055 | |
| Sicotan Yellow K2107 | | | 0,43 | | |
| Heliogen Green K8730 | | | 0,35 | | |
| Lamp Black 101 | | | 0,11 | | |
| Heliogen Blau K7104 | | | | 0,25 | |
| TPP | | | | 0,05 | |
| Sicotan Yellow K2011 | | | | | 0,077 |
| Black Pearls 800 | | | | | 0,12 |
| TOF | 0,01 | 0,01 | 0,01 | 0,01 | 0,01 |
| Tinuvin 329 | 0,2 | 0,2 | 0,2 | 0,2 | 0,2 |

**Tabelle 15: Vergleichsbeispiele 4-1 bis 4-5 vor und nach Bewitterung.**

| | **L*** | **a*** | **b*** | **Glanz 60°** | **L*** | **a*** | **b*** | **Glanz 60°** |
|---|---|---|---|---|---|---|---|---|
| | **0 h** | | | | **2600 h** | | | |
| **V. 4-1** | 90,5 | -9,6 | 82,7 | 80 | 91,9 | -9,0 | 65,1 | 79,1 |
| **Yellow** | | | | | | | | |
| **V. 4-2** | 34,9 | 36,1 | 17,2 | 78 | 36,7 | 34,3 | 13,5 | 76,8 |
| **Red** | | | | | | | | |
| **V. 4-3** | 31,3 | -13,7 | 2,5 | 77,8 | 32,0 | -13 | 1,7 | 76,7 |
| **Green** | | | | | | | | |
| **V. 4-4** | 34,8 | -6,5 | -29 | 77,9 | 35,2 | -5,4 | -30 | 77 |
| **Blue** | | | | | | | | |
| **V. 4-5** | 26,5 | 1,71 | 1,7 | 77,9 | 27,2 | 1,26 | 0,77 | 76,6 |
| **Brown** | | | | | | | | |

Visueller Eindruck:
V. 4-1: deutlicher Glanzverlust
V. 4-2: deutlicher Glanzverlust (Farbe wirkt sehr stumpf)
V. 4-3: deutlicher Glanzverlust (Farbe wirkt sehr stumpf)
V. 4-4: kein Glanzverlust (Farbe wirkt farbig)
V. 4-5: mittlerer Glanzverlust (Farbe wirkt stumpf)

Es ist bekannt, dass Titandioxid-haltige Pigmente mit UV-Strahlung wechselwirken und somit eine hohe Photoaktivität aufweisen. Ein relativ hoher UV-Absorbergehalt in der Substratschicht hat jedoch überraschenderweise keinen Einfluss auf die Bewitterungsstabilität im Fall von für Polycarbonat optimiertem Titandioxid-Pigment Kronos 2230.

**Tabelle 16: Vergleichsbeispiele 5-1 bis 5-4. Substratschicht mit UV-Lacksystem beschichtet.**

| | **V. 5-1 Red** | **V. 5-2 Yellow** | **V. 5-3 Blue** | **V. 5-4 Red w/o TiO₂** |
|---|---|---|---|---|
| **Einsatzstoff** | **Gew.-%** | **Gew.-%** | **Gew.-%** | **Gew.-%** |
| PC1 | 95,00 | 95,00 | 95,00 | 95,00 |
| PC3 | 4,437 | 3,86 | 4,6693 | 4,398 |
| Kronos 2230 | 0,1 | 1,0 | 0,13 | |
| Bayferrox 110M | 0,063 | | | 0,2 |
| Rot EG | 0,4 | | | 0,35 |
| Gelb 3G | | 0,14 | | |
| Lamp Black 101 | | | 0,0007 | |
| Paliogen Blau 6385 | | | 0,2 | |
| Heucodur Blue 2R | | | | 0,022 |
| Sicotan Yellow K2107 | | | | 0,03 |

**Tabelle 17: Vergleichsbeispiele 5-1 bis 5-4 vor und nach Bewitterung.**

| | **L*** | **a*** | **b*** | **Gloss 60°** | **L*** | **a*** | **b*** | **Gloss 60°** |
|---|---|---|---|---|---|---|---|---|
| | **0 h** | | | | **2600 h** | | | |
| **V. 5-1 Red** | 33,5 | 37,2 | 16,9 | 77,7 | 34,6 | 36,3 | 14,8 | 76,8 |
| **V. 5-2 Yellow** | 87,1 | -6,2 | 68,4 | 81 | 87,9 | -5,1 | 60,8 | 79,2 |
| **V. 5-3 Blue** | 29,3 | 5,79 | -20,5 | 78 | 29,6 | 4,37 | -18,4 | 77 |
| **V. 5-4 Red w/o TiO₂** | 30,9 | 29,5 | 14,8 | 80 | 31,4 | 29,1 | 14,4 | 76,3 |

Visueller Eindruck:
V. 5-1: deutlicher Glanzverlust
V. 5-2: deutlicher Glanzverlust
V. 5-3: wenig Glanzverlust
V. 5-4: kein Glanzverlust; stumpfe Farbe; nicht brillant (bezieht sich schon auf den 0 h Wert)

Es zeigt sich, dass Farbrezepturen, die kein Titandioxid enthalten, sehr stabil sind. Nach Bewitterung tritt kein signifikanter Glanzverlust auf. Allerdings weisen derartige Farbtöne einen stumpfen, wenig brillanten Farbeindruck auf.

**Tabelle 18: Vergleichsbeispiele 6-1 bis 6-4. Höhere Farbmittelkonzentrationen in der Substratschicht. Substratschicht mit UV-Lacksystem beschichtet**

| | **V. 6-1** | **V. 6-2** | **V. 6-3** | **V. 6-4** |
|---|---|---|---|---|
| **Einsatzstoff** | **Gew.-%** | **Gew.-%** | **Gew.-%** | **Gew.-%** |
| PC1 | 95,0 | 95,0 | 95,0 | 95,0 |
| PC3 | 3,87 | 3,15 | 3,50 | 4,0 |
| Kronos 2230 | 0,2 | 0,4 | | 0,5 |
| Bayferrox 110M | 0,126 | 0,25 | | |
| Macrolex Red EG | 0,7 | 1,0 | | |
| Heucodur Blue 2R | 0,044 | 0,1 | | |
| Sicotan Yellow K2107 | 0,06 | 0,1 | | |
| Sicotan Yellow K1010 | | | 1,0 | |
| Gelb 3G | | | 0,5 | 0,5 |

**Tabelle 19: Vergleichsbeispiele 6-1 bis 6-4 vor und nach Bewitterung.**

| | **L*** | **a*** | **b*** | **Glanz 60°** | **L*** | **a*** | **b*** | **Glanz 60°** |
|---|---|---|---|---|---|---|---|---|
| | **0 h** | | | | **2600 h** | | | |
| **V. 6-1** | 33,6 | 35,6 | 15,8 | 78 | 35,8 | 32,8 | 12,9 | 77,2 |
| **V. 6-2** | 34,2 | 35,4 | 15,8 | 78 | 38,8 | 29,4 | 11,6 | 77,1 |
| **V. 6-3** | 78,3 | 6,0 | 84,5 | 79 | 79,5 | 6,6 | 82,7 | 78,3 |
| **V. 6-4** | 73,8 | 16,1 | 74,9 | 79,3 | 74,4 | 16,4 | 70,3 | 78,2 |

Visueller Farbeindruck:
V. 6-1: Glanzverlust
V. 6-2: Glanzverlust
V. 6-3: kein Glanzverlust
V. 6-4: kein Glanzverlust

Es zeigt sich, dass Zusammensetzungen, die kein Titandioxid enthalten (V. 6-3), gegen Bewitterung sehr stabil sind. Allerdings weisen derartige Farbtöne einen stumpfen, wenige brillanten Farbeindruck auf. Da Titandioxid durch die diskutierte Photoaktivität organische Farbmittel abbaut, wäre der Fachmann davon ausgegangen, dass eine Erhöhung der Farbkonzentration an organischen Farbmitteln in den Zusammensetzungen zu einer erhöhten Stabilität beiträgt. Dies ist jedoch überraschenderweise nicht der Fall (V. 6-1, V. 6-2).

**Tabelle 20: Erfindungsgemäße Beispiele 7-1 bis 7-4. Anderes Titandioxid (Altiris 550, 800) in der Substratschicht. Substratschicht mit UV-Lacksystem beschichtet.**

| | **Bsp. 7-1 Erfindungsg.** | **Bsp. 7-2 Erfindungsg.** | **Bsp. 7-3 Erfindungsg.** | **Bsp.7-4 Erfindungsg.** |
|---|---|---|---|---|
| **Einsatzstoff** | **Gew.-%** | **Gew.-%** | **Gew.-%** | **Gew.-%** |
| PC2 | 95,000 | 95,000 | 95,000 | 95,000 |
| PC3 | 4,290 | 4,290 | 3,740 | 3,740 |
| Macrolex Yellow G | 0,005 | 0,005 | 0,005 | 0,005 |
| Bayferrox 110 M | 0,100 | 0,100 | 0,100 | 0,100 |
| Macrolex Rot EG | 0,300 | 0,300 | 0,300 | 0,300 |
| Farbmittel 12a/b | 0,005 | 0,005 | 0,005 | 0,005 |
| Altiris 550 | 0,300 | | 0,300 | |
| Altiris 800 | | 0,300 | | 0,300 |
| Tinuvin 326 | | | 0,500 | 0,500 |
| Richnox B900 | | | 0,050 | 0,050 |

**Tabelle 21: Beispiele 7-1 bis 7-4 vor und nach Bewitterung.**

| | **L*** | **a*** | **b*** | **L*** | **a*** | **b*** | **ΔL*** | **Δa*** | **Δb*** |
|---|---|---|---|---|---|---|---|---|---|
| | **0 h** | **0 h** | **0 h** | **2750 h** | **2750 h** | **2750 h** | | | |
| **Bsp. 7-1 Erfindungsg.** | 36,06 | 35,68 | 18,94 | 36,87 | 35,15 | 17,49 | 0,81 | 0,53 | 1,45 |
| **Bsp. 7-2 Erfindungsg.** | 34,38 | 33,78 | 17,66 | 35,08 | 33,59 | 16,41 | 0,70 | 0,19 | 1,25 |
| **Bsp. 7-3 Erfindungsg.** | 35,29 | 35,39 | 18,11 | 36,00 | 35,05 | 16,85 | 0,71 | 0,34 | 1,26 |
| **Bsp. 7-4 Erfindungsg.** | 33,88 | 33,70 | 16,88 | 34,41 | 33,65 | 16,11 | 0,53 | 0,05 | 0,77 |

Bei allen erfindungsgemäßen Beispielen weisen die Zusammensetzungen eine Lichttransmission < 0,5 % im Bereich von 380 bis 780 nm, bestimmt bei einer Schichtdicke von 4 mm nach DIN ISO 13468-2:2006 (D65, 10°), auf.

Visueller Eindruck:
Erfindungsg. Bsp. 7-1: kein Glanzverlust
Erfindungsg. Bsp. 7-2: kein Glanzverlust
Vergleichs-Bsp. 6-3: deutlicher Glanzverlust
Vergleichs-Bsp. 6-4: deutlicher Glanzverlust
Erfindungsg. Bsp. 7-3: kein Glanzverlust
Erfindungsg. Bsp. 7-4: kein Glanzverlust

Da rote Rezepturen den stärksten Glanzverlust nach Bewitterung zeigten, wurden für diese weiteren Versuche rote Rezepturen als Basis ausgewählt. Die Zusammensetzungen 7-1 bis 7-4 ergeben zusammen mit einem UV-Lacksystem als Beschichtung völlig überraschend einen bewitterungsstabilen Mehrschichtkörper. Die Kombination von erfindungsgemäß einzusetzendem Titandioxid mit bestimmter Mindestpartikelgröße und Beschichtungszusammensetzung mit Kronos 2230 führt hingegen nicht zu bewitterungsstabilen Mehrschichtkörpern. Davon war nach den geringen bzw. nicht vorhandenen Unterschieden bei nicht beschichteten Probekörpern nicht auszugehen Das erfindungsgemäß einzusetzende Titandioxid mit der größten Partikelgröße (D₅₀) liefert die stabilsten Zusammensetzungen für die erfindungsgemäßen Mehrschichtkörper.

Es ist weiterhin erkennbar (V. 7-3, V. 7-4), dass UV-Absorber in Kombination mit den erfindungsgemäß einzusetzenden Titandioxidtypen eine positive Wirkung entfalten. Hiervon war im Lichte der Vergleichsbeispiele mit erhöhtem UV-Absorbergehalt ebenfalls nicht auszugehen.

**Tabelle 22: Schmelzestabilität von Zusammensetzungen mit unterschiedlichen TitandioxidTypen. Zusammensetzungen 8-1 bis 8-3.**

| | **Bsp. 8-1** | **Bsp. 8-2** | **Bsp. 8-3** |
|---|---|---|---|
| **Einsatzstoff** | **Gew.-%** | **Gew.-%** | **Gew.-%** |
| PC2 | 95,0 | 95,0 | 95,0 |
| PC3 | 4,5 | 4,5 | 4,5 |
| Altiris 550 | 0,5 | | |
| Altiris 800 | | 0,5 | |
| Kronos 2230 | | | 0,5 |

**Tabelle 23: Schmelzestabilität der Zusammensetzungen 8-1 bis 8-3.**

| | **Bsp. 8-1** | **Bsp. 8-2** | **Bsp. 8-3** |
|---|---|---|---|
| **MVR 300 °C; 5 min** | 7,4 | 6,8 | 6,9 |
| **MVR 300 °C; 20 min** | 7,7 | 7,5 | 7,5 |
| **MVR 300 °C; 30 min** | 8,0 | 7,9 | 7,8 |

Überraschenderweise konnte gezeigt werden, dass Zusammensetzungen, enthaltend ein nicht für Polycarbonat-optimiertes Titandioxid-Pigment (Bsp. 8-1 und 8-2), keine signifikant geringere Schmelzestabilität aufweisen als Zusammensetzungen, enthaltend einen für Polycarbonat optimierten Titandioxidtyp (Kronos 2230, Bsp. 8-3).

## Patentansprüche

1. Mehrschichtkörper, umfassend
a) eine Substratschicht mit einer Lichttransmission im Bereich von 380 bis 780 nm von weniger als 0,5 %, bestimmt bei einer Schichtdicke von 4 mm nach DIN ISO 13468-2:2006 (D65, 10°),
bestehend aus einer thermoplastischen Zusammensetzung auf Basis von Polymethylmethacrylat oder aromatischem Polycarbonat,
enthaltend
i) Weißpigment Titandioxid,
wobei das in der Zusammensetzung der Substratschicht enthaltene Titandioxid einen Rutil-Anteil von mindestens 60 Gew.-% aufweist und
wobei das Titandioxid eine Beschichtung aufweist, welche Siliciumdioxid und Aluminiumoxid und ggf. Titandioxid enthält, und wobei das Verhältnis der Summe von Aluminium- und Siliciumanteil in Atom-%, bestimmt mittels Röntgenphotonenelektronenspektroskopie, in der Beschichtung zum Titananteil in Atom%, bestimmt mittels Röntgenphotonenelektronenspektroskopie, in der Beschichtung größer als 5:1 ist,
ii) mindestens zwei Farbmittel, welche entweder ein organisches Farbmittel und ein anorganisches Farbmittel oder zwei organische Farbmittel sind, wobei das anorganische Farbmittel kein Titandioxid ist und kein Ruß ist,
b) ggf. eine Primerschicht und
c) eine Decklackschicht,
wobei in der Primerschicht und/oder der Decklackschicht mindestens ein UV-Absorber enthalten ist,
**dadurch gekennzeichnet, dass**
das in der Zusammensetzung der Substratschicht enthaltene Titandioxid eine mittlere Partikelgröße D₅₀, bestimmt mittels Rasterelektronenmikroskopie, von ≥ 0,3 µm aufweist.

2. Mehrschichtkörper nach Anspruch 1, wobei die Decklackschicht mindestens einen UV-Absorber aus der Gruppe der Benzophenone, Resorcine, 2-(2-Hydroxyphenyl-)bentriazole, Hydroxyphenyl-s-triazine, 2-Cyanacrylate und/oder Oxalanilide enthält.

3. Mehrschichtkörper nach Anspruch 1 oder 2, wobei die Gesamtkonzentration an Farbmitteln in der thermoplastischen Zusammensetzung der Substratschicht, ausgenommen Titandioxid, 0,012 bis 1,2 Gew.-% beträgt.

4. Mehrschichtkörper nach einem der vorhergehenden Ansprüche, wobei das Titandioxid eine mittlere Partikelgröße D₅₀, bestimmt mittels Rasterelektronenmikroskopie, von 0,6 µm bis 1,2 µm aufweist.

5. Mehrschichtkörper nach einem der vorhergehenden Ansprüche, wobei das Verhältnis der Summe von Aluminium- und Siliciumanteil in Atom-% in der Beschichtung des Titandioxids zum Titananteil in Atom-% in der Beschichtung des Titandioxids mindestens 15:1 ist.

6. Mehrschichtkörper nach einem der vorhergehenden Ansprüche, wobei das Titandioxid eine mittlere Partikelgröße D₅₀, bestimmt mittels Rasterelektronenmikroskopie, von 0,65 µm bis 1,15 µm aufweist und das Verhältnis der Summe von Aluminium- und Siliciumanteil in Atom-% in der Beschichtung des Titandioxids zum Titananteil in Atom-% in der Beschichtung des Titandioxids mindestens 19:1 ist.

7. Mehrschichtkörper nach einem der vorhergehenden Ansprüche, wobei die thermoplastische Zusammensetzung der Substratschicht 0,1 bis 0,6 Gew.-% mindestens eines UV-Absorbers enthält.

8. Mehrschichtkörper nach einem der vorhergehenden Ansprüche, wobei die thermoplastische Zusammensetzung der Substratschicht 2-(5-Chloro-2H-benzotriazol-2-yl)-6-(1,1-dimethylethyl)-4-methyl-phenol als UV-Absorber enthält.

9. Mehrschichtkörper nach einem der vorhergehenden Ansprüche, wobei die Menge an Titandioxid in der thermoplastischen Zusammensetzung der Substratschicht 0,1 bis 1,5 Gew.-% beträgt.

10. Mehrschichtkörper nach einem der vorhergehenden Ansprüche, wobei das mindestens eine organische Farbmittel ausgewählt ist aus der Gruppe, bestehend aus: 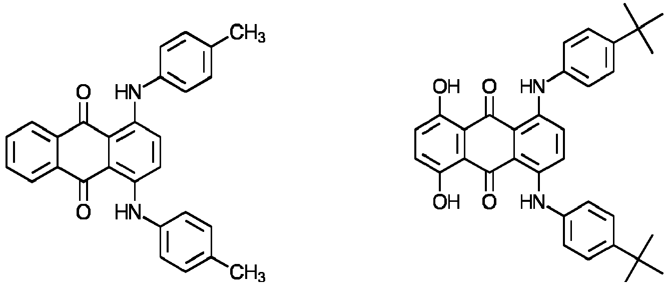 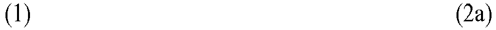 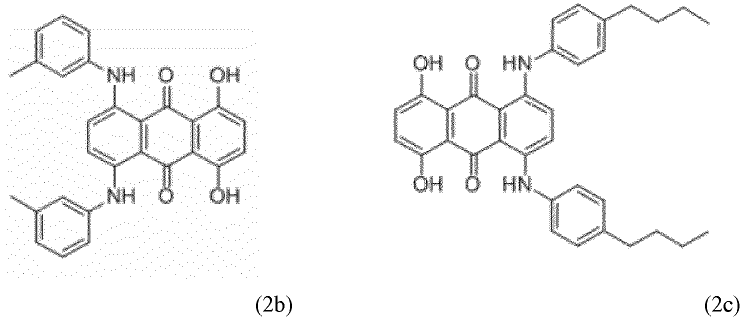 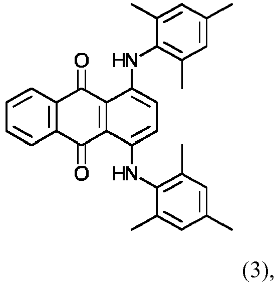 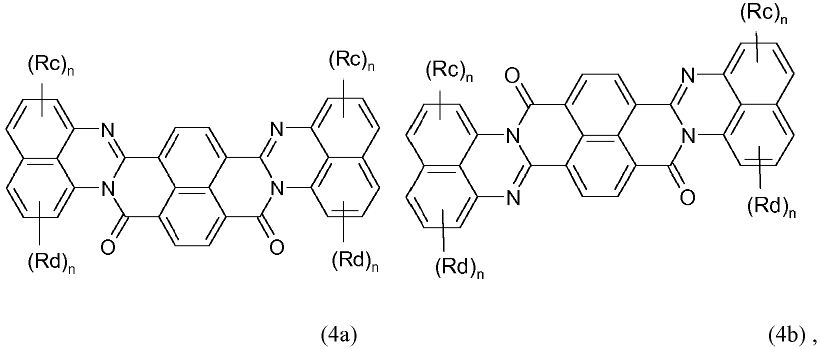 wobei
- Rc und Rd unabhängig voneinander für einen linearen oder verzweigten Alkylrest oder Halogen stehen,
- n unabhängig vom jeweiligen R für eine natürliche Zahl zwischen 0 und 3 steht, wobei der Rest für n = 0 Wasserstoff ist, 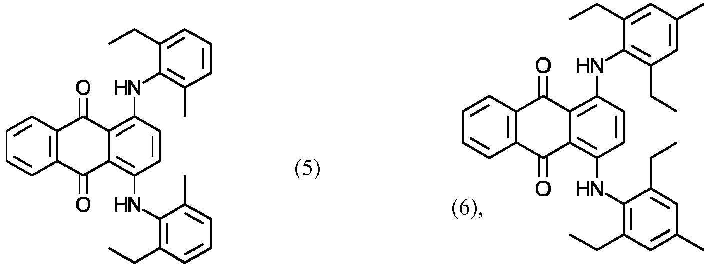 und
- mindestens ein rotes und/oder violettes Farbmittel, ausgewählt aus der Gruppe, bestehend aus den Farbmitteln der Formeln (7), (8), (9), (10), (11), (12a), (12b) und/oder (13) 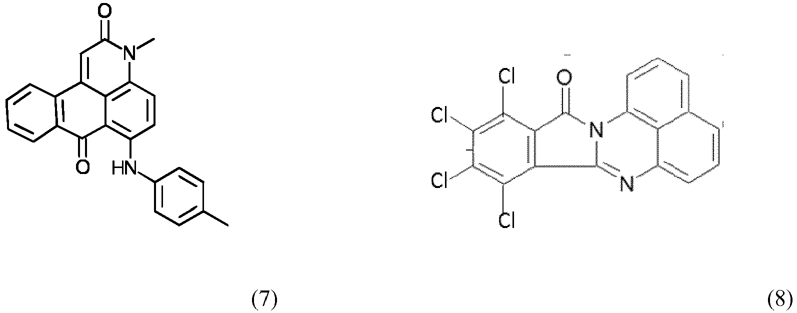 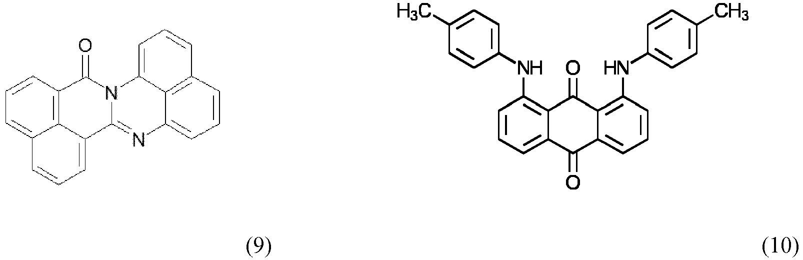 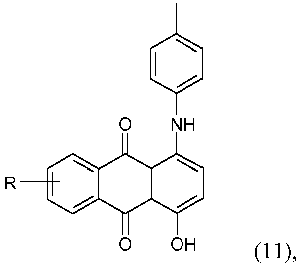 wobei R ausgewählt ist aus der Gruppe, die aus H und p-Methylphenylamin-Rest besteht, 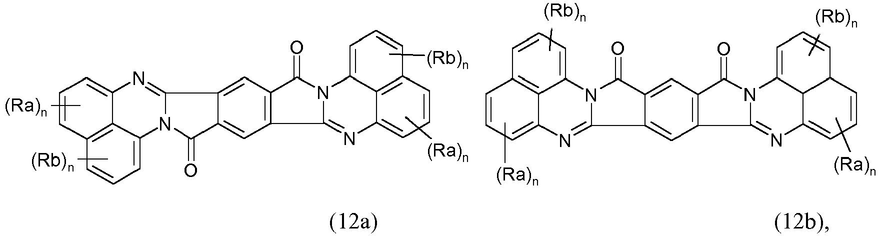 wobei
- Ra und Rb unabhängig voneinander für einen linearen oder verzweigten Alkylrest oder Halogen stehen,
- n unabhängig vom jeweiligen R für eine natürliche Zahl zwischen 0 und 3 steht, wobei der Rest für n=0 Wasserstoff ist, 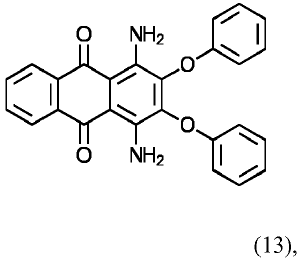
- optional ein oder mehrere weitere Farbmittel, ausgewählt aus der Gruppe, bestehend aus den gelben und orangen Farbmitteln der Formeln (14), (15), (16), (17) und/oder (18) 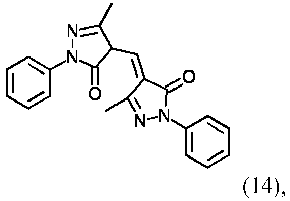 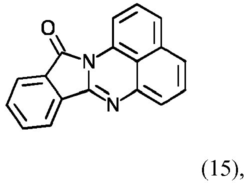 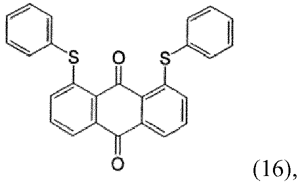 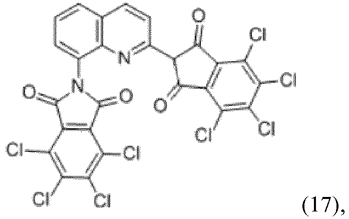 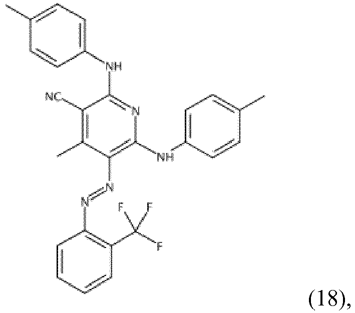 das Farbmittel Amaplast Gelb GHS mit der CAS-Nummer 13676-91-01, solchen der Heliogen Blau-Reihe und der Heliogen Grün-Reihe.

11. Mehrschichtkörper nach einem der vorhergehenden Ansprüche, wobei die Decklackschicht auf Polysiloxanbasis ist und eine Kombination eines organo-modifizierten Silans mit einem KieselSol enthält und wobei die Decklackschicht Siliciumdioxid-Partikel enthält.

12. Mehrschichtkörper nach einem der vorhergehenden Ansprüche, wobei die Dicke der Substratschicht 1,0 bis 6,0 mm beträgt.

13. Mehrschichtkörper nach einem der vorhergehenden Ansprüche, wobei der Mehrschichtkörper ein Rohrelement, Teil eines Fensterrahmens, Teil eines Gehäuses eines Elektroschaltkastens, Teil einer Antenne, eine Lampenabdeckung, eine Gießkanne, Gehäuseteil eines Werkzeugs oder Werkzeugkoffers, Teil eines Spielzeugs oder Spielgerätes, eine Antenne oder ein Antennenelement oder ein Gehäuse oder Teil eines Gehäuses einer Mobilfunk-Basisstation ist.

14. Mehrschichtkörper nach einem der Ansprüche 1 bis 12, wobei der Mehrschichtkörper ein Element einer Fahrzeugaußenhaut ist.

15. Verwendung von
dem Weißpigment Titandioxid, aufweisend einen Rutil-Anteil von mindestens 60 Gew.-% und eine mittlere Partikelgröße D₅₀, bestimmt mittels Rasterelektronenmikroskopie, von ≥ 0,3 µm, und aufweisend eine Beschichtung, welche Siliciumdioxid, Aluminiumoxid und ggf. Titandioxid enthält, wobei das Verhältnis der Summe von Aluminium- und Siliciumanteil in Atom-% in der Beschichtung zum Titananteil in Atom-% in der Beschichtung, bestimmt mittels Röntgenphotonenelektronenspektroskopie, größer als 5:1 ist, in einer Substratschicht in Kombination mit einer Beschichtung, umfassend
eine Decklackschicht und ggf. eine Primerschicht, wobei in der Decklackschicht und/oder der Primerschicht mindestens ein UV-Absorber enthalten ist,
zur Erzielung von Bewitterungsstabilität, ausgedrückt durch eine Veränderung der Farbwerte a^{∗}, b^{∗}, L^{∗} nach 2500 h künstlicher Bewitterung mit Xenon-Belichtung bei 0,75 W bei 340 nm gemäß ASTM G 155-13 von ΔL^{∗} < 1,5, Δa^{∗} < 1,5 und Δb^{∗} < 1,5, von farbigen Mehrschichtkörpern, umfassend
a) die Substratschicht mit einer Lichttransmission im Bereich von 380 bis 780 nm von weniger als 0,5 %, bestimmt bei einer Schichtdicke von 4 mm nach DIN ISO 13468-2:2006 (D65, 10°), bestehend aus einer thermoplastischen Zusammensetzung auf Basis von Polymethylmethacrylat oder aromatischem Polycarbonat und enthaltend mindestens zwei Farbmittel, welche entweder ein organisches Farbmittel und ein anorganisches Farbmittel oder zwei organische Farbmittel sind, wobei das anorganische Farbmittel kein Titandioxid und kein Ruß ist,
b) die Beschichtung umfassend die Decklackschicht und ggf. die Primerschicht.

## Claims

1. Multilayer article comprising
a) a substrate layer having light transmittance in the range from 380 to 780 nm of less than 0.5%, determined at a sheet thickness of 4 mm to DIN ISO 13468-2:2006 (D65, 10°),
consisting of a thermoplastic composition based on polymethylmethacrylate or aromatic polycarbonate, comprising
i) titanium dioxide white pigment,
wherein the titanium dioxide present in the composition of the substrate layer has a rutile content of at least 60% by weight and
wherein the titanium dioxide has a coating containing silicon dioxide and aluminum oxide and optionally titanium dioxide, and wherein the ratio of the sum total of the aluminum content and silicon content in atom%, determined by means of x-ray photon electron spectroscopy, in the coating to the titanium content in atom%, determined by means of x-ray photon electron spectroscopy, in the coating is greater than 5:1,
ii) at least two colorants that are either one organic colorant and one inorganic colorant or two organic colorants, wherein the inorganic colorant is not a titanium dioxide and not a carbon black,
b) optionally a primer layer and
c) a topcoat layer,
wherein the primer layer and/or the topcoat layer includes at least one UV absorber,
**characterized in that**
the titanium dioxide present in the composition of the substrate layer has a median particle size D₅₀, determined by means of scanning electron microscopy, of ≥ 0.3 µm.

2. Multilayer article according to Claim 1, wherein the topcoat layer comprises at least one UV absorber from the group of the benzophenones, resorcinols, 2-(2-hydroxyphenyl)benzotriazoles, hydroxyphenyl-s-triazines, 2-cyanoacrylates and/or oxalanilides.

3. Multilayer article according to Claim 1 or 2, wherein the total concentration of colorants in the thermoplastic composition of the substrate layer, excluding titanium dioxide, is 0.012% to 1.2% by weight.

4. Multilayer article according to any of the preceding claims, wherein the titanium dioxide has a median particle size D₅₀, determined by means of scanning electron microscopy, of 0.6 µm to 1.2 µm.

5. Multilayer article according to any of the preceding claims, wherein the ratio of the sum total of the aluminum content and silicon content in atom% in the titanium dioxide coating to the titanium content in atom% in the titanium dioxide coating is at least 15:1.

6. Multilayer article according to any of the preceding claims, wherein the titanium dioxide has a median particle size D₅₀, determined by means of scanning electron microscopy, of 0.65 µm to 1.15 µm and the ratio of the sum total of the aluminum content and silicon content in atom% in the titanium dioxide coating to the titanium content in atom% in the titanium dioxide coating is at least 19:1.

7. Multilayer article according to any of the preceding claims, wherein the thermoplastic composition of the substrate layer contains 0.1% to 0.6% by weight of at least one UV absorber.

8. Multilayer article according to any of the preceding claims, wherein the thermoplastic composition of the substrate layer contains 2-(5-chloro-2H-benzotriazol-2-yl)-6-(1,1-dimethylethyl)-4-methylphenol as UV absorber.

9. Multilayer article according to any of the preceding claims, wherein the amount of titanium dioxide in the thermoplastic composition of the substrate layer is 0.1% to 1.5% by weight.

10. Multilayer article according to any of the preceding claims, wherein the at least one organic colorant is selected from the group consisting of: 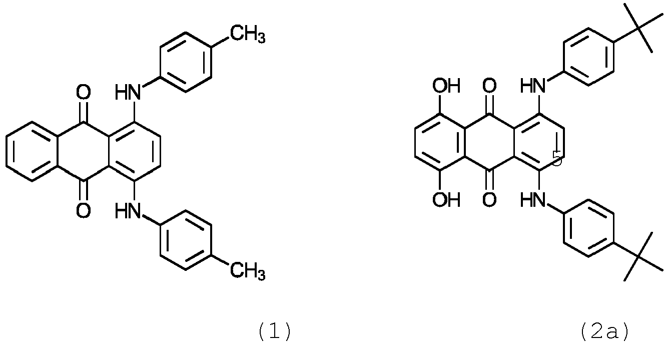 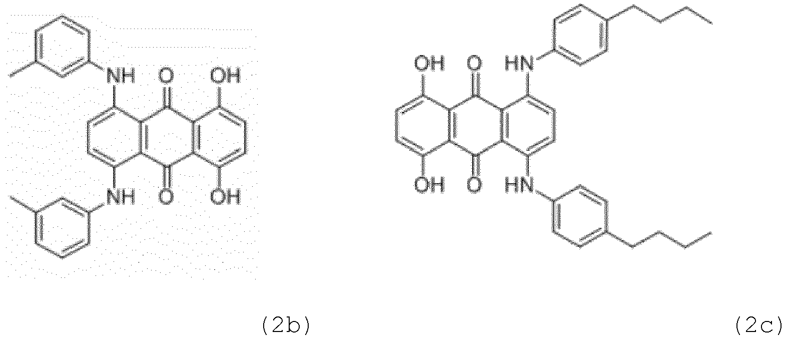 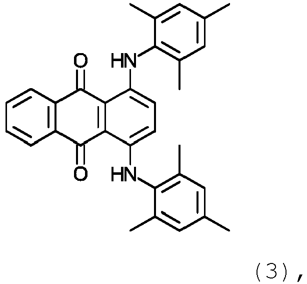 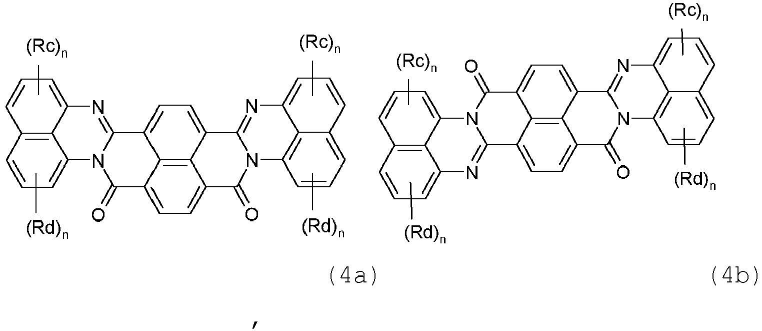 where
- Rc and Rd are independently a linear or branched alkyl radical or halogen,
- n independently of the respective R is a natural number from 0 to 3, where the radical is hydrogen when n = 0, 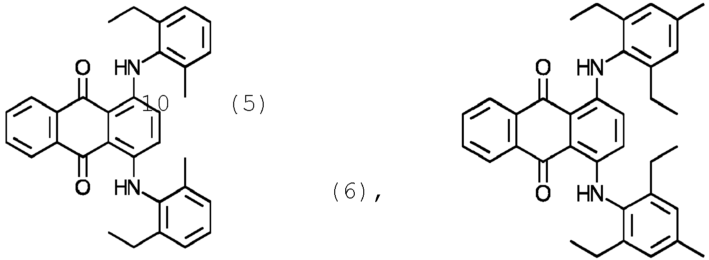 and
- at least one red and/or violet colorant selected from the group consisting of the colorants of formulae (7), (8), (9), (10), (11), (12a), (12b) and/or (13) 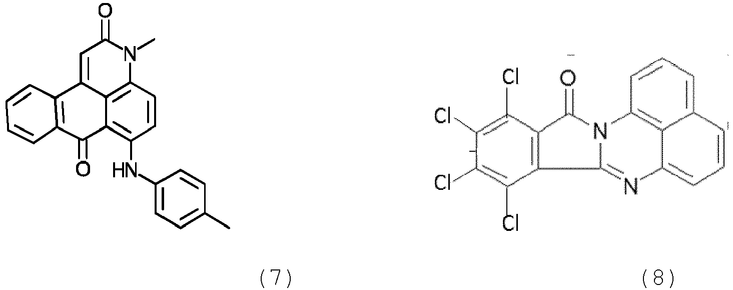 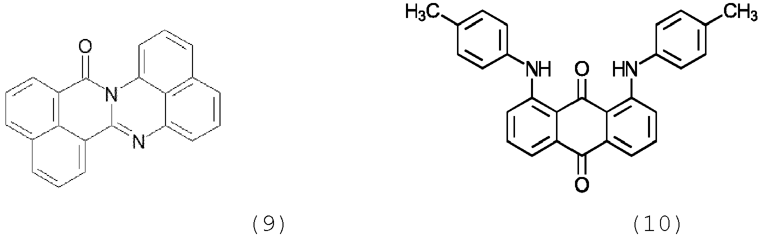 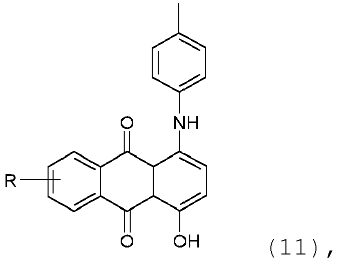 where R is selected from the group consisting of H and p-methylphenylamine radical, 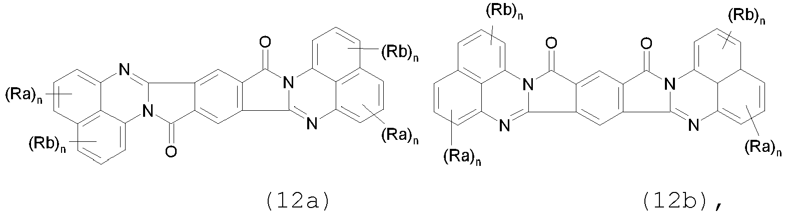 where
- Ra and Rb are independently a linear or branched alkyl radical or halogen,
- n independently of the respective R is a natural number from 0 to 3, where the radical is hydrogen when n = 0, 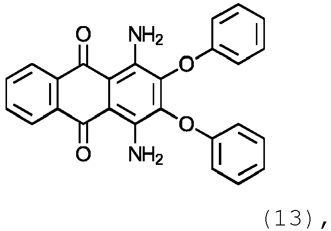
- optionally one or more further colorants selected from the group consisting of the yellow and orange colorants of the formulae (14), (15), (16), (17) and/or (18) 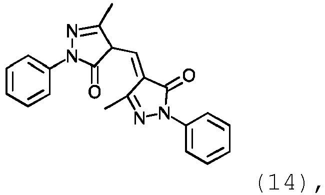 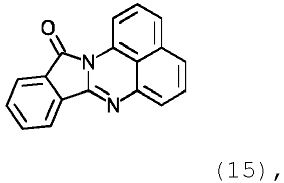 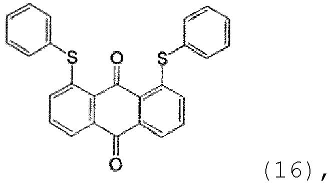 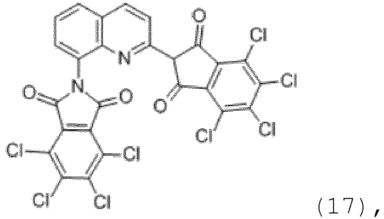 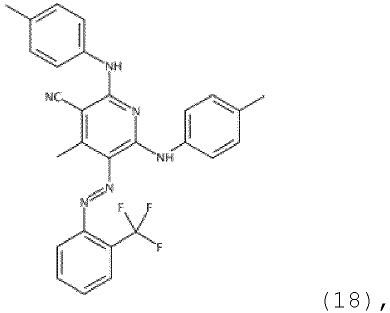 the colorant Amaplast Yellow GHS with CAS number 13676-91-01, and those from the Heliogen Blue series and the Heliogen Green series.

11. Multilayer article according to any of the preceding claims, wherein the topcoat layer is polysiloxanebased and comprises a combination of an organomodified silane with a silica sol, and wherein the topcoat layer comprises silicon dioxide particles.

12. Multilayer article according to any of the preceding claims, wherein the thickness of the substrate layer is 1.0 to 6.0 mm.

13. Multilayer article according to any of the preceding claims, wherein the multilayer article is a pipe element, part of a window frame, part of a housing of an electrical switchgear box, part of an antenna, a lamp cover, a watering can, a housing part of a tool or toolbox, part of a toy or play equipment, an antenna or an antenna element, or a housing or part of a housing of a mobile communications base station.

14. Multilayer article according to any of Claims 1 to 12, wherein the multilayer article is an element of an outer vehicle skin.

15. Use of
the white pigment titanium dioxide having a rutile content of at least 60% by weight and a median particle size D₅₀, determined by means of scanning electron microscopy, of ≥ 0.3 µm, and having a coating comprising silicon dioxide, aluminum oxide and optionally titanium dioxide, wherein the ratio of the sum total of the aluminum content and silicon content in atom% in the coating to the titanium content in atom% in the coating, determined by means of x-ray photon electron spectroscopy, is greater than 5:1, in a substrate layer in combination with a coating comprising
a topcoat layer and optionally a primer layer, wherein the topcoat layer and/or the primer layer includes at least one UV absorber,
for achievement of weathering stability, expressed by a change in the color values a*, b*, L* after artificial weathering for 2500 h with xenon illumination at 0.75 W at 340 nm to ASTM G 155-13 of ΔL* < 1.5, Δa* < 1.5 and Δb* < 1.5, of colored multilayer articles comprising
a) the substrate layer having light transmittance in the range from 380 to 780 nm of less than 0.5%, determined at a sheet thickness of 4 mm to DIN ISO 13468-2:2006 (D65, 10°), consisting of a thermoplastic composition based on polymethylmethacrylate or aromatic polycarbonate and comprising
at least two colorants that are either one organic colorant and one inorganic colorant or two organic colorants, wherein the inorganic colorant is not a titanium dioxide and not a carbon black,
b) the coating comprising the topcoat layer and optionally the primer layer.

## Revendications

1. Corps multicouche comprenant
a) une couche de substrat présentant une transmission de lumière dans la plage de 380 à 780 nm inférieure à 0,5%, déterminée à une épaisseur de couche de 4 mm selon la norme DIN ISO 13468-2:2006 (D65, 10°), constituée par une composition thermoplastique à base de poly(méthacrylate de méthyle) ou de polycarbonate aromatique,
contenant
i) du dioxyde de titane en tant que pigment blanc, le dioxyde de titane contenu dans la composition de la couche de substrat présentant une proportion de rutile d'au moins 60% en poids et
le dioxyde de titane présentant un revêtement qui contient du dioxyde de silicium et de l'oxyde d'aluminium et le cas échéant du dioxyde de titane et le rapport de la somme de la proportion d'aluminium et de la proportion de silicium, en % en atome, déterminées par spectroscopie photoélectronique X, dans le revêtement à la proportion de titane, en % en atome, déterminée par spectroscopie photoélectronique X, dans le revêtement étant supérieur à 5:1,
ii) au moins deux colorants qui sont soit un colorant organique et un colorant inorganique, soit deux colorants organiques, le colorant inorganique n'étant ni du dioxyde de titane, ni de la suie,
b) le cas échéant une couche d'apprêt et
c) une couche de laque de recouvrement,
au moins un absorbant des UV étant contenu dans la couche d'apprêt et/ou dans la couche de laque de recouvrement, **caractérisé**
**en ce que** le dioxyde de titane contenu dans la composition de la couche de substrat présente une grosseur moyenne de particule D₅₀, déterminée par microscopie électronique à balayage, ≥ 0,3 µm.

2. Corps multicouche selon la revendication 1, la couche de laque de recouvrement contenant au moins un absorbant des UV du groupe constitué par la benzophénone, le résorcinol, le 2-(2-hydroxyphényl)benzotriazole, l'hydroxyphényl-s-triazine, le 2-cyanoacrylate et/ou l'oxalanilide.

3. Corps multicouche selon la revendication 1 ou 2, la concentration totale en colorants dans la composition thermoplastique de la couche de substrat, à l'exception du dioxyde de titane, étant de 0,012 à 1,2% en poids.

4. Corps multicouche selon l'une quelconque des revendications précédentes, le dioxyde de titane présentant une grosseur moyenne de particule D₅₀, déterminée par microscopie électronique à balayage, de 0,6 à 1,2 µm.

5. Corps multicouche selon l'une quelconque des revendications précédentes, le rapport de la somme de la proportion d'aluminium et de la proportion de silicium, en % en atome, dans le revêtement du dioxyde de titane à la proportion de titane en % en atome dans le revêtement du dioxyde de titane étant d'au moins 15:1.

6. Corps multicouche selon l'une quelconque des revendications précédentes, le dioxyde de titane présentant une grosseur moyenne de particule D₅₀, déterminée par microscopie électronique à balayage, de 0,65 µm à 1,15 µm et le rapport de la somme de la proportion d'aluminium et de la proportion de silicium, en % en atome, dans le revêtement du dioxyde de titane à la proportion de titane en % en atome dans le revêtement du dioxyde de titane étant d'au moins 19:1.

7. Corps multicouche selon l'une quelconque des revendications précédentes, la composition thermoplastique de la couche de substrat contenant 0,1 à 0,6% en poids d'au moins un absorbant des UV.

8. Corps multicouche selon l'une quelconque des revendications précédentes, la composition thermoplastique de la couche de substrat contenant du 2-(5-chloro-2H-benzotriazol-2-yl)-6-(1,1-diméthyléthyl)-4-méthylphénol en tant qu'absorbant des UV.

9. Corps multicouche selon l'une quelconque des revendications précédentes, la quantité de dioxyde de titane dans la composition thermoplastique de la couche de substrat étant de 0,1 à 1,5% en poids.

10. Corps multicouche selon l'une quelconque des revendications précédentes, ledit au moins un colorant organique étant choisi dans le groupe constitué par : 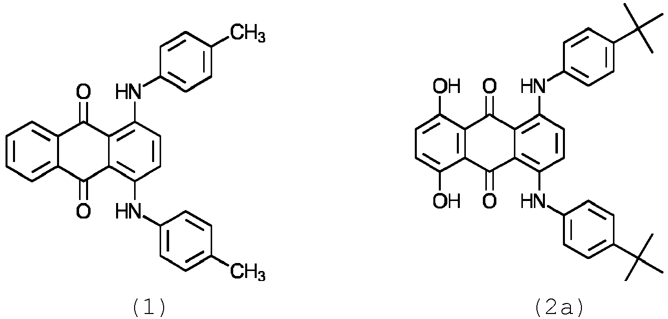 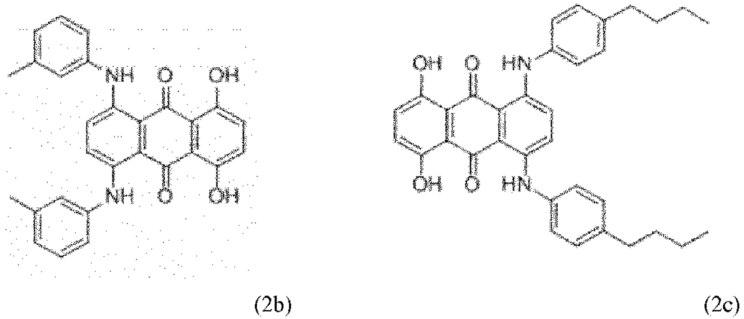 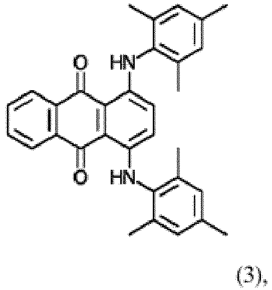 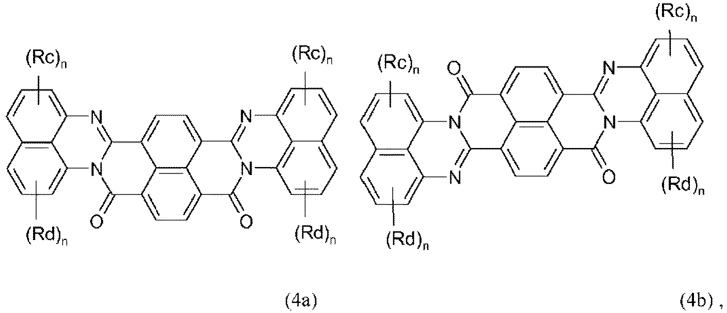 où
- Rc et Rd représentent, indépendamment l'un de l'autre, un radical alkyle linéaire ou ramifié ou halogène,
- n représente, indépendamment du radical R respectif, un nombre naturel entre 0 et 3, le radical pour n = 0 étant hydrogène, 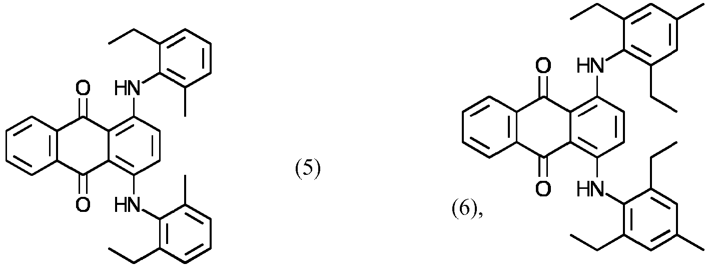 et
- au moins un colorant rouge et/ou violet, choisi dans le groupe constitué par les colorants des formules (7), (8), (9), (10), (11), (12a), (12b) et/ou (13) 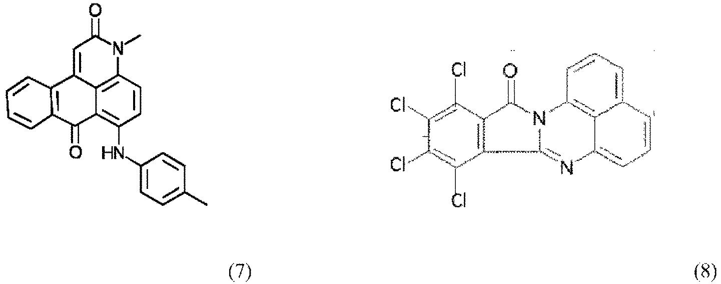 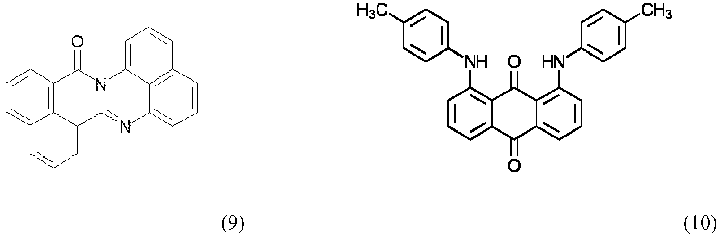 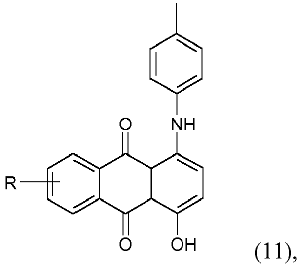 R étant choisi dans le groupe constitué par H et le radical p-méthylphénylamine, 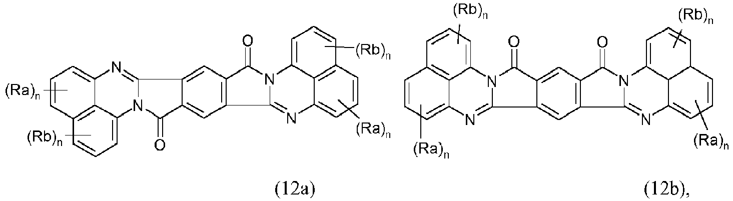 où
- Ra et Rb représentent, indépendamment l'un de l'autre, un radical alkyle linéaire ou ramifié ou halogène,
- n représente, indépendamment du radical R respectif, un nombre naturel entre 0 et 3, le radical pour n = 0 étant hydrogène, 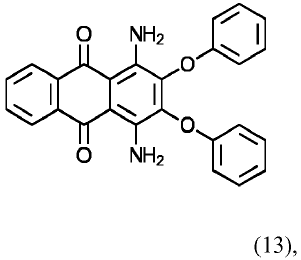
- éventuellement un ou plusieurs autres colorants, choisis dans le groupe constitué par les colorants jaunes et orange des formules (14), (15), (16), (17) et/ou (18) 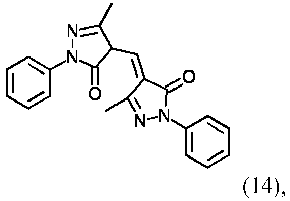 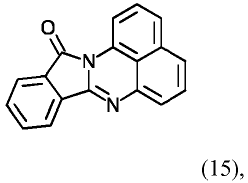 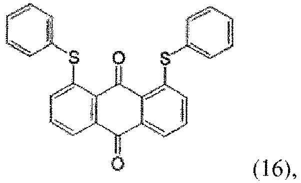 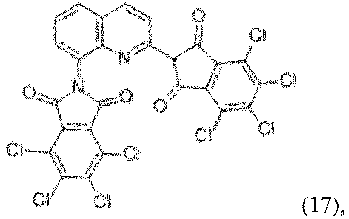 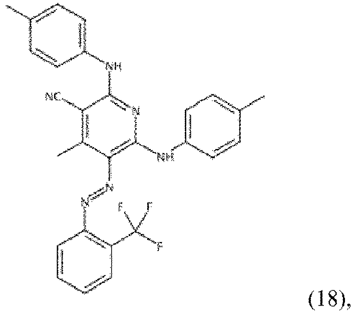
le colorant Amaplast Gelb GHS présentant le numéro CAS 13676-91-01, celui de la série Heliogen Blue et de la série Heliogen vert.

11. Corps multicouche selon l'une quelconque des revendications précédentes, la couche de laque de recouvrement étant à base de polysiloxane et contenant une combinaison d'un silane organomodifié avec un sol silicique et la couche de laque de recouvrement contenant des particules de dioxyde de silicium.

12. Corps multicouche selon l'une quelconque des revendications précédentes, l'épaisseur de la couche de substrat étant de 1,0 à 6,0 mm.

13. Corps multicouche selon l'une quelconque des revendications précédentes, le corps multicouche étant un élément tubulaire, une partie d'un châssis de fenêtre, une partie d'un boîtier d'une armoire de commutation électrique, une partie d'une antenne, un couvercle de lampe, une boîte d'arrosage, une partie de boîtier d'outil ou d'un coffre à outils, une partie d'un jeu ou d'un appareil de jeu, une antenne ou un élément d'antenne ou un boîtier ou une partie d'un boîtier d'une station de base de téléphonie mobile.

14. Corps multicouche selon l'une quelconque des revendications 1 à 12, le corps multicouche étant un élément d'une enveloppe extérieure de véhicule.

15. Utilisation
du dioxyde de titane, en tant que pigment blanc, présentant une proportion de rutile d'au moins 60% en poids et une grosseur moyenne de particule D₅₀, déterminée par microscopie électronique à balayage, ≥ 0,3 µm, et présentant un revêtement qui contient du dioxyde de silicium, de l'oxyde aluminium et le cas échéant du dioxyde de titane, le rapport de la somme de la proportion d'aluminium et de silicium, en % en atome, dans le revêtement à la proportion de titane, en % en atome, dans le revêtement, déterminées par spectroscopie photoélectronique X, supérieur à 5:1, dans une couche de substrat en combinaison avec un revêtement comprenant une couche de laque de recouvrement et le cas échéant une couche d'apprêt, au moins un absorbant des UV étant contenu dans la couche de laque de recouvrement et/ou dans la couche d'apprêt,
pour obtenir une stabilité aux intempéries, exprimée par une modification des indices de couleur a*, b*, L* après soumission à des intempéries artificielles pendant 2500 h par une lumière au xénon à 0,75 W et à 340 nm selon la norme ASTM G 155-13 de ΔL* < 1,5, Δa* < 1,5 et Δb* < 1,5, de corps multicouches colorés, comprenant
a) la couche de substrat présentant une transmission de lumière dans la plage de 380 à 780 nm inférieure à 0,5%, déterminée à une épaisseur de couche de 4 mm selon la norme DIN ISO 13468-2:2006 (D65, 10°), constituée par une composition thermoplastique à base de poly(méthacrylate de méthyle) ou de polycarbonate aromatique et contenant au moins deux colorants qui sont soit un colorant organique et un colorant inorganique, soit deux colorants organiques, le colorant inorganique n'étant ni du dioxyde de titane ni de la suie,
b) le revêtement comprenant la couche de laque de recouvrement et le cas échéant la couche d'apprêt.
